# EUROPEAN PATENT APPLICATION

(11) **EP 4 145 863 A1**
(43) Date of publication of application: **08.03.2023**
(21) Application number: 21795276.1
(22) Date of filing: 23.04.2021
(51) Int. Cl.: H04W 4/00

(54) **CONNECTION MANAGEMENT METHOD FOR REMOTE USER EQUIPMENT, AND USER EQUIPMENT AND NETWORK-SIDE DEVICE**

(30) Priority: 28.04.2020 CN 202010352343
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Conti, Marco
(86) International application number: PCT/CN2021/089119
(87) International publication number: WO 2021/218787

(57) **Abstract**

Embodiments of the present invention provide a method for remote terminal connection management, a terminal, and a network-side device, and relate to the field of communications technologies. The method for remote terminal connection management includes: sending a first relay request to a network-side device, where the first relay request is used to request the network-side device to perform relay function-related configuration; and receiving first configuration information sent by the network-side device, where the first configuration information includes configuration information of a first Uu RLC bearer, and the first Uu RLC bearer is used to transmit Uu signaling of a remote terminal.

## Description

### CROSS-REFERENCE TO RELATED APPLICATIONS

This application claims priority to Chinese Patent Application No. 202010352343.X, filed in China on April 28, 2020, which is incorporated herein by reference in its entirety.

### TECHNICAL FIELD

Embodiments of the present invention relate to the field of communications technologies, and in particular, to a method for remote terminal connection management, a terminal, and a network-side device.

### BACKGROUND

### 1. Sidelink (sidelink, or translated as sidelink or sidelink)

Sidelink has been supported since long term evolution (Long Term Evolution, LTE) release 12, and is used for direct data transmission between user equipments (User Equipment, UE, or terminal for short) without through a network device.

LTE sidelink is designed to be applicable to specific public safety affairs (for example, emergency communication on a fire site or a disaster site such as an earthquake-stricken area), vehicle to everything (vehicle to everything, V2X) communication, or the like. Vehicle to everything communication includes various services, for example, basic security communication, advanced (autonomous) driving, platooning, and sensor extension. LTE sidelink supports only broadcast communication, and therefore is mainly used for basic security communication. Other advanced V2X services with strict quality of service (Quality of Service, QoS) requirements in terms of delay and reliability are supported by new radio (New Radio, NR) sidelink.

A fifth generation (5^{th} Generation, 5G) NR system may be used in an operating band above 6 GHz that is not supported by LTE, to support larger operating bandwidth. However, an NR system of the current version only supports an interface between a base station and a terminal, but does not support a sidelink interface for direct communication between terminals. The sidelink interface may also be referred to as a PC5 interface.

### 2. Sidelink relay (relay)

In a typical sidelink relay scenario, a remote (remote) UE transmits data to a relay (relay) UE through a sidelink link between them, and then the relay UE forwards the data to a base station. In this scenario, the relay UE forwards the data to be transmitted between the remote UE and the base station.

In a process of implementing this application, the inventor has found that the prior art has at least the following problems:

In an existing mechanism, there is no connection management solution for remote UEs under a sidelink relay architecture, and an existing Uu interface-based procedure cannot be directly applied to an architecture with relays. This is because there is only one Uu air interface within one hop, related signaling is transmitted on a signaling radio bearer (Signalling Radio Bearer, SRB), and what is to be transmitted on which SRB has been clearly defined. Such procedure cannot be directly used for a remote UE, and can only be used for a connection procedure of a relay UE. As a result, the remote UE cannot establish a connection, causing service establishment and transmission failure and reducing user experience.

### SUMMARY

Embodiments of the present invention provide a method for remote terminal connection management, a terminal, and a network-side device, to resolve the problem of service establishment and transmission failure caused by a remote terminal unable to establish a normal connection with a network-side device under a sidelink relay architecture.

To resolve the foregoing technical problem, the present invention is implemented as follows.

According to a first aspect, an embodiment of the present invention provides a method for remote terminal connection management, applied to a relay terminal, where the method includes:
sending a first relay request to a network-side device, where the first relay request is used to request the network-side device to perform relay function-related configuration; and
receiving first configuration information sent by the network-side device, where the first configuration information includes configuration information of a first Uu radio link control (Radio Link Control, RLC) bearer, and the first Uu RLC bearer is used to transmit Uu signaling of a remote terminal.

According to a second aspect, an embodiment of the present invention provides a method for remote terminal connection management, applied to a remote terminal, where the method includes:
transmitting Uu signaling of the remote terminal by using a first sidelink RLC bearer established between the remote terminal and a relay terminal or by using a sidelink radio resource control (Radio Resource Control, RRC) message.

According to a third aspect, an embodiment of the present invention provides a method for remote terminal connection management, applied to a network-side device, where the method includes:
receiving a first relay request sent by a relay terminal, where the first relay request is used to request the network-side device to perform relay function-related configuration; and
sending first configuration information to the relay terminal based on the first relay request, where the first configuration information includes configuration information of a first Uu RLC bearer, and the first Uu RLC bearer is used to transmit Uu signaling of a remote terminal.

According to a fourth aspect, an embodiment of the present invention provides a terminal, including:
a first sending module, configured to send a first relay request to a network-side device, where the first relay request is used to request the network-side device to perform relay function-related configuration; and
a first receiving module, configured to receive first configuration information sent by the network-side device based on the first relay request, where the first relay request is used to request the network-side device to perform relay function-related configuration.

According to a fifth aspect, an embodiment of the present invention provides a terminal, including:
a transmission module, configured to transmit Uu signaling of a remote terminal by using a first sidelink RLC bearer established between the remote terminal and a relay terminal or by using a sidelink RRC message.

According to a sixth aspect, an embodiment of the present invention provides a network-side device, including:
a first receiving module, configured to receive a first relay request sent by a relay terminal, where the first relay request is used to request the network-side device to perform relay function-related configuration; and
a first sending module, configured to send first configuration information to the relay terminal based on the first relay request, where the first configuration information includes configuration information of a first Uu RLC bearer, and the first Uu RLC bearer is used to transmit Uu signaling of a remote terminal.

According to a seventh aspect, an embodiment of the present invention provides a terminal, including a processor, a memory, and a program or instructions stored in the memory and capable of running on the processor, where when the program or the instructions are executed by the processor, the steps of the method for remote terminal connection management applied to the first aspect are implemented.

According to an eighth aspect, an embodiment of the present invention provides a terminal, including a processor, a memory, and a program or instructions stored in the memory and capable of running on the processor, where when the program or the instructions are executed by the processor, the steps of the method for connection management applied to the second aspect are implemented.

According to a ninth aspect, an embodiment of the present invention provides a network-side device, including a processor, a memory, and a program or instructions stored in the memory and capable of running on the processor, where when the program or the instructions are executed by the processor, the steps of the method for remote terminal connection management according to the third aspect are implemented.

According to a tenth aspect, an embodiment of the present invention provides a readable storage medium, where a program or instructions are stored in the readable storage medium, and when the program or the instructions are executed by a processor, the steps of the method for remote terminal connection management according to the first aspect are implemented; or when the program or the instructions are executed by a processor, the steps of the method for remote terminal connection management according to the second aspect are implemented; or when the program or the instructions are executed by a processor, the steps of the method for remote terminal connection management according to the third aspect are implemented.

According to an eleventh aspect, an embodiment of the present invention provides a chip, including a processor and a communication interface, where the communication interface is coupled to the processor, and the processor is configured to run a program or instructions to implement the steps of the method for remote terminal connection management according to the first aspect, or implement the steps of the method for remote terminal connection management according to the second aspect, or implement the steps of the method for remote terminal connection management according to the third aspect.

According to a twelfth aspect, an embodiment of the present invention provides a computer software product, where the computer software product is stored in a non-volatile storage medium, and the software product is configured to be executed by at least one processor to implement the steps of the method for remote terminal connection management according to the first aspect; or to implement the steps of the method for remote terminal connection management according to the second aspect; or to implement the steps of the method for remote terminal connection management according to the third aspect.

In the embodiments of the present invention, a dedicated Uu RLC bearer is configured between the network-side device and the relay terminal, for transmitting the Uu signaling of the remote terminal. In this way, a connection is established between the remote terminal and the network-side device for normal service transmission.

### BRIEF DESCRIPTION OF DRAWINGS

Other advantages and benefits will become apparent to those of ordinary skill in the art by reading detailed description of the preferred embodiments below. The accompanying drawings are merely intended to illustrate the purposes of the preferred embodiments and are not intended to limit the present invention. Throughout the accompanying drawings, the same reference numerals represent the same components. In the accompanying drawings:
FIG. 1 and FIG. 2 are schematic architectural diagrams of a wireless communications system according to embodiments of the present invention;
FIG. 3 is a schematic flowchart of a method for remote terminal connection management according to an embodiment of the present invention;
FIG. 4 is a schematic flowchart of a method for remote terminal connection management according to another embodiment of the present invention;
FIG. 5 is a schematic flowchart of a method for remote terminal connection management according to still another embodiment of the present invention;
FIG. 6 is a schematic flowchart of a method for remote terminal connection management according to yet another embodiment of the present invention;
FIG. 7 is a schematic structural diagram of a terminal according to an embodiment of the present invention;
FIG. 8 is a schematic structural diagram of a terminal according to another embodiment of the present invention;
FIG. 9 is a schematic structural diagram of a network-side device according to an embodiment of the present invention;
FIG. 10 is a schematic diagram of a hardware structure of a terminal according to an embodiment of the present invention;
FIG. 11 is a schematic structural diagram of a terminal according to another embodiment of the present invention;
FIG. 12 is a schematic structural diagram of a terminal according to still another embodiment of the present invention; and
FIG. 13 is a schematic structural diagram of a network-side device according to another embodiment of the present invention.

### DESCRIPTION OF EMBODIMENTS

In the specification and claims of this application, the term "include" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device. In addition, in the specification and claims, the use of "and/or" represents presence of at least one of the connected objects, for example, "A and/or B" indicates the following three cases: only A presents, only B presents, or both A and B present.

In the embodiments of the present invention, the word such as "an example" or "for example" is used to represent giving an example, an instance, or an illustration. Any embodiment or design solution described as "an example" or "for example" in the embodiments of the present invention shall not be construed as being more preferential or advantageous than other embodiments or design solutions. To be precise, the terms such as "an example" or "for example" are intended to present a related concept in a specific manner.

The following describes the embodiments of the present invention with reference to the accompanying drawings. The embodiments of the present invention provide a method for remote terminal connection management, a terminal, and a network-side device, which can be applied to a wireless communications system. The wireless communications system may be a 5G system, an evolved long term evolution (Evolved Long Term Evolution, eLTE) system, or a later evolved communications system.

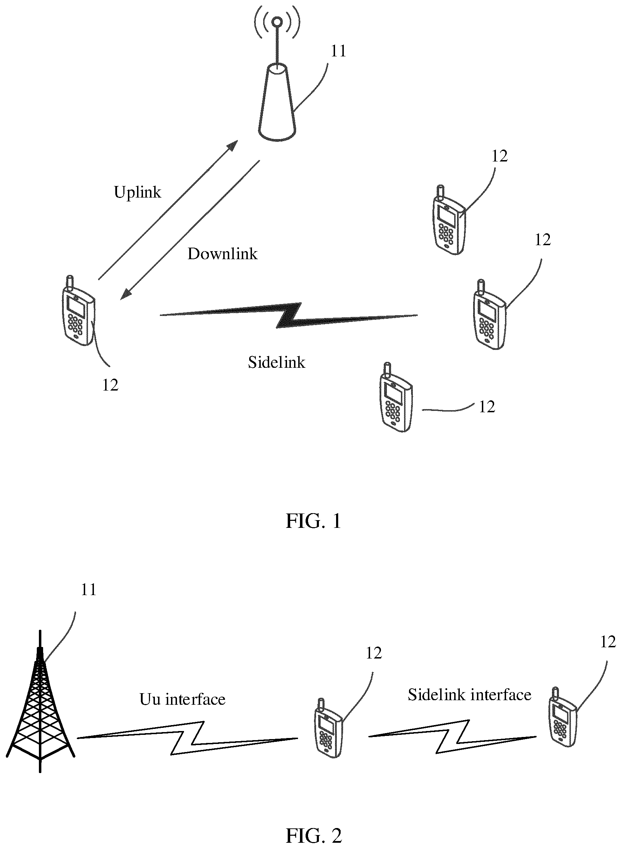

FIG. 1 and FIG. 2 are schematic architectural diagrams of a wireless communications system according to embodiments of the present invention. As shown in FIG. 1, the wireless communications system may include a network-side device 11 and a plurality of terminals 12. In addition to being connected to the network-side device 11 through a Uu interface, the terminal 12 may also be directly connected to other terminals 12 through a sidelink interface.

The network-side device 11 provided in this embodiment of the present invention may be a base station, and the base station may be a commonly used base station, may be an evolved node base station (evolved node base station, eNB), or may be a device such as a network-side device (for example, a next generation node base station (next generation node base station, gNB) or a transmission and reception point (transmission and reception point, TRP)) or a cell cell in a 5G system. Alternatively, the base station may be a network-side device in a later evolved communications system.

The terminal 12 provided in this embodiment of the present invention may be a mobile phone, a tablet computer, a notebook computer, an ultra-mobile personal computer (Ultra-Mobile Personal Computer, UMPC), a netbook, a personal digital assistant (Personal Digital Assistant, PDA), or the like.

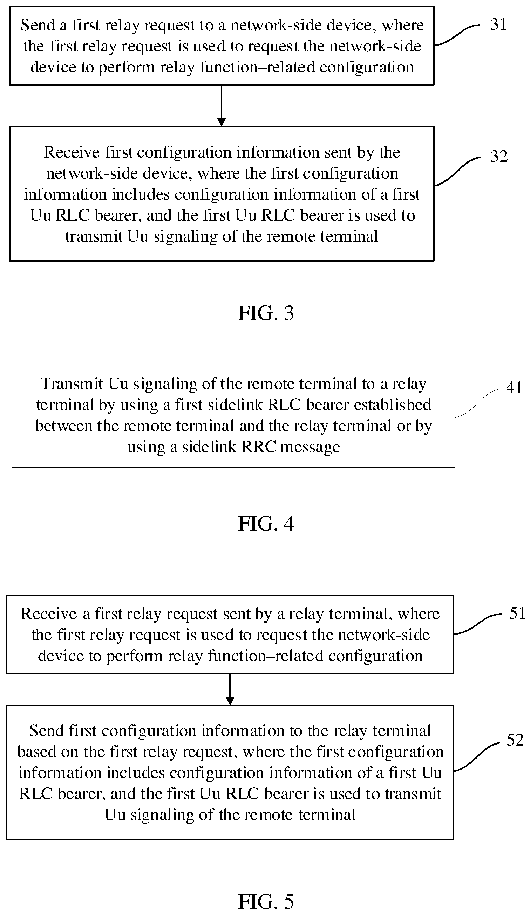

Referring to FIG. 3, FIG. 3 is a schematic flowchart of a method for remote terminal connection management according to an embodiment of the present invention. The method is applied to a relay terminal and includes the following steps.

Step 31: Send a first relay request to a network-side device, where the first relay request is used to request the network-side device to perform relay function-related configuration.

Uu RLC bearer refers to bearers of an RLC layer and a lower layer thereof in a protocol stack of a Uu interface, excluding an upper layer of the RLC layer.

Optionally, configuration information of a first Uu RLC bearer includes at least one of the following: RLC configuration and medium access control (Medium Access Control, MAC) configuration, where the MAC configuration includes at least one of the following: logical channel identifier (Identifier, ID), logical channel priority, and prioritized bit rate (Prioritized Bit Rate, PBR).

Optionally, the first Uu RLC bearer is a Uu SRB RLC bearer or a Uu DRB RLC bearer.

Step 32: Receive first configuration information sent by the network-side device, where the first configuration information includes configuration information of a first Uu RLC bearer, and the first Uu RLC bearer is used to transmit Uu signaling (signaling) of a remote terminal.

In this embodiment of the present invention, the relay terminal sends a relay request to the network-side device to request to configure a dedicated Uu RLC bearer between the network-side device and the relay terminal for transmitting the Uu signaling of the remote terminal, so as to establish a connection between the remote terminal and the network-side device for normal service transmission.

In this embodiment of the present invention, the Uu signaling of the remote terminal includes uplink Uu signaling sent by the remote terminal to the network-side device and/or downlink Uu signaling sent by the network-side device to the remote terminal.

In this embodiment of the present invention, optionally, the method for remote terminal connection management may further include:
receiving uplink Uu signaling of the remote terminal and forwarding the uplink Uu signaling to the network-side device on the first Uu RLC bearer, and/or receiving downlink Uu signaling for the remote terminal sent by the network-side device and forwarding the downlink Uu signaling to the remote terminal on the first Uu RLC bearer, thereby implementing transmission of the Uu signaling of the remote terminal.

In this embodiment of the present invention, optionally, the uplink Uu signaling and the downlink Uu signaling may be transmitted by a bidirectional acknowledged mode (Acknowledged Mode, AM) RLC entity in different directions on a same Uu RLC bearer. Certainly, the uplink Uu signaling and the downlink Uu signaling may alternatively be transmitted by using different Uu RLC bearers.

In some other embodiments of the present invention, the relay terminal may send the Uu signaling of the remote terminal not by using the Uu RLC bearer, but in a manner of container (container), that is, adding the Uu signaling of the remote terminal to an RRC message of the relay terminal to be transmitted to the network-side device. In this manner, optionally, the RRC message may carry at least one of the following information: an identifier of the remote terminal and indication information of a type of the Uu signaling of the remote terminal, where the type of the Uu signaling includes at least one of the following: radio resource control (RRC) signaling and non-access stratum (Non Access Stratum, NAS) signaling.

In this embodiment of the present invention, there may be one or more remote terminals connected to the relay terminal. If there is more than one remote terminal, optionally, Uu signaling of different remote terminals is transmitted by using different first Uu RLC bearers; or Uu signaling of different remote terminals is transmitted by using a same first Uu RLC bearer.

To distinguish different remote terminals, optionally, indication information is carried in the Uu signaling (for example, carried in a layer 2 protocol data unit (Protocol Data Unit, PDU) header) or sent together with the Uu signaling, where the indication information is used to indicate an identity of the remote terminal, for example, the identifier of the remote terminal. Optionally, whether to carry or send the indication information is configured by the network-side device.

In this embodiment of the present invention, there may be one or more types of Uu signaling of the remote terminal. For example, the Uu signaling of the remote terminal includes radio resource control (RRC) signaling and non-access stratum (Non Access Stratum, NAS) signaling.

In this embodiment of the present invention, Uu RRC signaling of the remote terminal is RRC signaling between the remote terminal and the network-side device. Uu NAS signaling of the remote terminal is NAS signaling between the remote terminal and a core network node, an access and mobility management function (Access and Mobility Management Function, AMF). Signaling is end-to-end, that is, directly transmitted between two endpoints, with encryption and integrity protection enabled for the SRB by default.

In this embodiment of the present invention, optionally, different types of Uu signaling of a same remote terminal is transmitted by using a same first Uu RLC bearer; or different types of Uu signaling of a same remote terminal is transmitted by using different first Uu RLC bearers.

To distinguish different types of signaling, optionally, indication information is carried in the Uu signaling (for example, carried in a layer 2 protocol data unit (PDU) header) or sent together with the Uu signaling, where the indication information is used to indicate a service type of the Uu signaling. Optionally, whether to carry or send the indication information is configured by the network-side device.

In this embodiment of the present invention, optionally, the first relay request includes at least one of the following: relay indication information, where the relay indication information is used to indicate that a current message is the first relay request; an identifier of the remote terminal; service information of the remote terminal; and relay information.

Optionally, the service information includes at least one of the following:
quality of service flow identifier (QoS flow ID, QFI);
QoS profile (profile), where the QoS profile includes, for example, at least one of the following: packet delay budget (packet delay budget, PDB), packet error rate (packet error rate, PER), priority (priority), service type (such as guaranteed bit rate (Guaranteed bit rate, GBR), non-GBR, or delayCriticalGBR), averaging window size (AveragingWindow), and maximum data burst volume (MaxDataBurstVolume);
QoS parameter or QoS indicator, where the QoS parameter may alternatively be replaced with a standardized QoS indicator (indicator), that is, a corresponding QoS profile parameter value can be found in a normative table by using the standardized QoS indicator;
maximum flow bit rate (Maximum flow bit rate, MBR/MFBR); and
guaranteed flow bit rate (Guaranteed flow bit rate, GBR/GFBR).

In this embodiment of the present invention, the relay terminal may obtain service information to be sent by the remote terminal through a relay function by using an interaction procedure (for example, a discovery procedure or a connection establishment procedure) with the remote terminal.

In this embodiment of the present invention, when the relay terminal reports the service information of the remote terminal to the network-side device, optionally, the identifier of the remote terminal can also be carried, so that the network-side device can distinguish to which remote terminal the service information belongs, so as to provide better configuration.

Optionally, the relay information includes at least one of the following:
supported relay hop count;
relay architecture option (L2/L3 relay); and
whether a multi-connectivity relay architecture is supported.

I. The following describes a request/report on the Uu interface
   1. Relay terminal in idle (idle) state
      If the relay terminal is in the idle state, the relay terminal needs to enter an RRC connected state first, because only the relay terminal in the RRC connected state can forward data and provide a relay service function for a remote terminal. The relay terminal may send a first relay request to a network-side device in a process of entering the RRC connected state, or may send the first relay request to the network-side device through a dedicated signaling procedure after RRC connection setup succeeds. Feasible solutions are as follows.
      (1) In this embodiment of the present invention, optionally, if the relay terminal is in the idle state, the first relay request is carried in an RRC connection setup request to be sent to the network-side device.
         In a case that the first relay request is carried in the RRC connection setup request, the RRC connection setup request generally carries the first relay request by using MsgA or Msg3 of a random access channel (Random Access Channel, RACH) procedure. Such manner determines that capacity of signaling that can be carried is limited, and not much content can be carried. Generally, relay indication information (relay indicator) can be carried, for example, carried through a 1-bit (bit) cause value (cause value), to indicate that a current message is the first relay request.
      (2) The first relay request is carried in an RRC connection setup complete to be sent to the network-side device.
         In a case that the first relay request is carried in the RRC connection setup complete, the RRC connection setup complete is not limited in capacity, and can carry a relay field (relay field). The relay field being true indicates a connection setup initiated for a relay function. The relay field being false indicates a connection setup of a common terminal. In other words, a relay function-related configuration is requested from the network-side device by setting a special field. Optionally, at least one of the following may be further carried: an identifier of the remote terminal, service information of the remote terminal, and the like. The identifier of the remote terminal is used to indicate a terminal for which a relay operation is requested.
      (3) The first relay request is sent through first uplink signaling after RRC connection setup is completed.
         After the RRC connection setup is completed, in a case that the first relay request is sent through the first uplink signaling, the first uplink signaling may be reused existing uplink signaling or may be new uplink signaling. The reused existing uplink signaling may be, for example, existing sidelink UE information (SidelinkUEInformation) signaling or UE assistance information (UEAssistanceInformation). The new signaling may be, for example, relay information (Relay Information) or the like. Similarly, the first uplink signaling is not limited in capacity, and can carry specific relay information (relay info) to request the relay function-related configuration from the network-side device. Optionally, the relay information includes at least one of the following: relay indication information, an identifier of the remote terminal, service information of the remote terminal, and the like. If the service information of the remote terminal is carried, a complete relay function-related configuration can be requested from the network-side device, for example, a Uu data radio bearer (Data Radio Bearer, DRB) RLC bearer of service data is also requested.
      (4) In some embodiments of the present invention, a small amount of relay information can be first carried in (1) or (2). For example, to notify the network-side device that the relay terminal has entered the RRC connected state with an aim of implementing a relay function,. the relay information may carry, for example, a special value (such as relay indicator (relay indicator)) through a cause value (cause value); or a 1-bit relay field (relay field) is set to true; or a UE identifier of the remote terminal is carried, so that the network-side device can perform basic relay function signaling bearer or default data bearer configuration. Subsequently, detailed information of a service that requires the relay function is reported through a dedicated signaling procedure, and a service data-related configuration is requested from the network-side device.
   2. Relay terminal in inactive (inactive) state
      If the relay terminal is in the inactive (inactive) state, the relay terminal needs to enter an RRC connected state first, because only the relay terminal in the RRC connected state can forward data and provide a relay service function for a remote terminal. The relay terminal may send a first relay request to a network-side device in a process of entering the RRC connected state, or may send the first relay request to the network-side device through a dedicated signaling procedure after RRC connection setup succeeds. Feasible solutions are as follows.
      (1) The first relay request is carried in an RRC connection resume request to be sent to the network-side device.
         In a case that the first relay request is carried in the RRC connection resume request, the RRC connection resume request generally carries the first relay request by using MsgA or Msg3 of a random access channel (RACH) procedure. Such manner determines that capacity of signaling that can be carried is limited, and not much content can be carried. Generally, relay indication information (relay indicator) can be carried, for example, carried through a 1-bit (bit) cause value (cause value), to indicate that a current message is the first relay request.
      (2) The first relay request is carried in an RRC connection resume complete sent to the network-side device.
         In a case that the first relay request is carried in the RRC connection resume complete, the RRC connection resume complete is not limited in capacity, and can carry a relay field (relay field). The relay field being true indicates a connection setup initiated for a relay function. The relay field being false indicates a connection setup of a common terminal. In other words, a relay function-related configuration is requested from the network-side device by setting a special field. Optionally, at least one of the following may be further carried: an identifier of the remote terminal, service information of the remote terminal, and the like. The identifier of the remote terminal is used to indicate a terminal for which a relay operation is requested.
      (3) The first relay request is sent through first uplink signaling after RRC connection resume is completed.
         After the RRC connection resume is completed, in a case that the first relay request is sent through the first uplink signaling, the first uplink signaling may be reused existing uplink signaling or may be new uplink signaling. The reused existing uplink signaling may be, for example, existing sidelink UE information (SidelinkUEInformation) signaling or UE assistance information (UEAssistanceInformation). The new signaling may be, for example, relay information (RelayInformation) or the like. Similarly, the first uplink signaling is not limited in capacity, and can carry specific relay information (relay info) to request the relay function-related configuration from the network-side device. Optionally, the relay information includes at least one of the following: relay indication information, an identifier of the remote terminal, service information of the remote terminal, and the like. If the service information of the remote terminal is carried, a complete relay function-related configuration can be requested from the network-side device. For example, a Uu DRB RLC bearer of service data is also requested.
      (4) In some embodiments of the present invention, a small amount of relay information can be first carried in (1) or (2). For example, to notify the network-side device that the relay terminal has entered the RRC connected state with an aim of implementing the relay function, the relay information may carry, for example, a special value (such as relay indicator (relay indicator)) through a cause value (cause value); or a 1-bit relay field (relay field) is set to true; or a UE identifier of the remote terminal is carried, so that the network-side device can perform basic relay function signaling bearer or default data bearer configuration. Subsequently, detailed information of a service that requires the relay function is reported through a dedicated signaling procedure, and a service data-related configuration is requested from the network-side device.
   3. Relay terminal in RRC connected state
      If the relay terminal is in the RRC connected state, no state change is required, and the relay terminal can send the first relay request through the first uplink signaling. Feasible solutions are as follows.
      (1) In a one-step (one-step) manner, the relay terminal requests detailed configuration information from the network-side device at one time. A configuration includes both signaling bearer information and data bearer information. To obtain all information at one time, preferably, the relay terminal needs to report relay indication information, an identifier of the remote terminal, detailed service information, and detailed relay information to the network-side device, where the relay indicator is used to indicate that the report is a relay function-related report.
      (2) In a two-step manner, the relay terminal first requests, from the network-side device, configuration information of signaling for establishing a signaling bearer, and can also request configuration information for establishing a default data bearer. In the second step, the relay terminal requests dedicated data bearer information from the network-side device for data transmission. In such two-step request, reported information in the first step may be rough, for example, including only the relay indicator and the identifier of the remote terminal, indicating that the request is a basic relay configuration request; and the detailed service information and detailed relay information are reported to the network-side device in the second step.

In a case that the first relay request is sent through the first uplink signaling, the first uplink signaling may be reused existing uplink signaling or may be new uplink signaling. The reused existing uplink signaling may be, for example, existing sidelink UE information (SidelinkUEInformation) signaling or UE assistance information (UEAssistanceInformation). The new signaling may be, for example, relay information (RelayInformation) or the like. Similarly, the first uplink signaling is not limited in capacity, and can carry specific relay information (relay info) to request the relay function-related configuration from the network-side device. Optionally, the relay information includes at least one of the following: relay indication information, an identifier of the remote terminal, service information of the remote terminal, and the like. If the service information of the remote terminal is carried, a complete relay function-related configuration can be requested from the network-side device. For example, a Uu DRB RLC bearer of service data is also requested.

In a case that the Uu signaling of the remote terminal is transmitted, two ends are the remote terminal and the network-side device (serving cell/base station), and uplink Uu signaling is first transmitted from the remote terminal to the relay terminal through a PC5 interface, and then transmitted through a Uu interface of the relay terminal to the network-side device. A transmission process of downlink Uu signaling is reverse to that of uplink Uu signaling. In other words, the Uu signaling of the remote terminal needs to be transmitted through two air interfaces, and corresponding pipes need to be configured on the two air interfaces for bearing.

The Uu interface is an interface between the relay terminal and the network-side device (serving cell/base station).

The PC5 interface is a sidelink interface between the remote terminal and the relay terminal.

### II. Configuration of PC5 interface

In the foregoing embodiment, pipe-based bearing of the Uu interface is described, and pipe-based bearing of the PC5 interface is described below.

The PC5 interface is an interface through which a relay terminal communicates with a remote terminal by using a sidelink protocol.

In this embodiment of the present invention, optionally, before the sending a first relay request to a network-side device, the method further includes: performing a relay related discovery procedure and/or connection establishment procedure (Relay related discovery/link establishment) between the relay terminal and the remote terminal.

In a case that a remote terminal and a relay terminal have obtained basic relay function authorization, a relay related discovery procedure and/or connection establishment procedure can be performed. Optionally, a relay function authorization procedure is controlled by a core network, which may be an authorization and relay information obtaining procedure performed by the remote terminal and/or relay terminal in a network-connected state with the network-side device. Alternatively, the remote terminal may be preconfigured to obtain authorization and relay information.

After the remote terminal and/or the relay terminal obtains authorization, the network-side device can also configure, by using a system information block (System Information Block, SIB), dedicated signaling, or preconfigured information, a relay operation condition (for example, the relay terminal needs to be a terminal whose signal strength exceeds a preset threshold) for the remote terminal and/or the relay terminal. After the relay operation condition is satisfied, the relay related discovery procedure and/or connection establishment procedure may be performed between the remote terminal and the relay terminal.

Optionally, the discovery procedure and/or connection establishment procedure is completed through a signaling procedure of a PC5 link (link). Further optionally, the discovery procedure and/or connection establishment procedure is performed by using a signaling radio bearer (SRB) of the PC5 link.

The relay related discovery procedure and/or connection establishment procedure may be two procedures or may be combined into one procedure. In the case of two procedures, a mutual discovery procedure and then a connection establishment procedure are performed between the remote terminal and the relay terminal. In the case of one procedure, a relay related connection establishment procedure is directly performed between the remote terminal and the relay terminal. In both cases, the procedure or procedures are completed by using the SRB of the PC5 link (link).

The PC5 interface supports four types of SRBs:
SRB0: is used for broadcast address PC5-S signaling transmission for which security is not activated, for example, a direct communication request (direct communication request);
SRB1: is used for PC5-S signaling transmission for which security is activated, for example, security establishment/complete (security establishment/complete);
SRB2: is used for PC5-S signaling transmission after security is activated, for example, a heartbeat packet; and
SRB3: is used for PC5-RRC signaling transmission after security is activated, for example, capability information and reconfiguration information.

In the relay related discovery procedure and/or connection establishment procedure, for example, the first broadcast address discovery request and/or establishment request message is transmitted by using SRB0 for which security is not activated, and then a security establishment procedure is performed to transmit security establishment-related signaling (which is usually a security establishment request message and a security establishment complete message) by using SRB 1. The security establishment request message has integrity protection but is not encrypted, and the security establishment complete message has integrity protection and is encrypted. Then, a higher layer message with security protection is transmitted by using SRB2. Such message is PC5-S layer (layer) signaling that requires encryption and integrity protection, for example, a discovery response message or a relay connection establishment complete message.

After the foregoing relay related discovery procedure and/or connection establishment procedure is completed, if the relay terminal determines that it needs to provide a data relay service for the remote terminal, the relay terminal can send the first relay request to the network-side device.

In this embodiment of the present invention, optionally, the method for remote terminal connection management further includes the following step.

Step 33: Establish, based on configuration information of a first sidelink RLC bearer on a relay terminal side, the first sidelink RLC bearer with the remote terminal, where the first sidelink RLC bearer is used to transmit Uu signaling of the remote terminal, and the first sidelink RLC bearer has a mapping relationship with the first Uu RLC bearer.

Sidelink RLC bearer refers to bearers of an RLC layer and a lower layer thereof in a protocol stack of a PC5 interface, excluding an upper layer of the RLC layer.

The configuration information of the first sidelink RLC bearer includes at least one of the following: RLC configuration and medium access control (MAC) configuration, where the MAC configuration includes at least one of the following: logical channel identifier (ID), logical channel priority, and prioritized bit rate (Prioritized Bit Rate, PBR).

Optionally, the first sidelink RLC bearer is a sidelink DRB bearer or a sidelink SRB RLC bearer.

In this embodiment of the present invention, a sidelink RLC bearer is established between the relay terminal and the remote terminal, so that the relay terminal can receive the Uu signaling from the remote terminal by using the sidelink RLC bearer, and forward the Uu signaling to the network-side device by using the first Uu RLC bearer; or the relay terminal receives the Uu signaling sent by the network-side device by using the first Uu RLC bearer, and forwards the Uu signaling to the remote terminal by using the sidelink RLC bearer, so as to implement Uu signaling transmission between the remote terminal and the network-side device.

The Uu signaling of the remote terminal may include Uu RRC signaling and NAS signaling.

To carry the Uu RRC signaling and NAS signaling of the remote terminal, a new RLC bearer needs to be configured in the following two manners.

One of the two manners is to configure sidelink RLC bearers corresponding to SRB4 and SRB5 respectively for transmission of the Uu RRC signaling and NAS signaling of the remote terminal on the PC5 interface. An SRB generally uses an AM transmission mode, and has a default sequence number (Sequence Number, SN) length and the like. The SRB can use a default configuration or a specified configuration.

The other manner is to configure sidelink RLC bearers corresponding to SRB0 and SRB1 respectively for transmission of the Uu RRC signaling and NAS signaling of the remote terminal on the PC5 interface. A DRB used for signaling transmission uses the AM transmission mode, an SN configuration that is the same as the SN length of the SRB, and the like. The DRB can use a default configuration (which may be the same as the default SRB configuration) or a specified configuration.

The biggest difference between the SRB RLC bearer and the DRB RLC bearer is whether signaling information is carried can be reflected or not. For example, SRB information can be identified directly based on different RLC bearer ID ranges or logical channel identifier (Logical Channel Identify, LCID) ranges. If both the SRB RLC bearer and the DRB RLC bearer belong to a same range, signaling can be preferentially transmitted by configuring a higher priority and an infinite PBR.

In this embodiment of the present invention, optionally, after the establishing the first sidelink RLC bearer with the remote terminal, the method further includes:
receiving uplink Uu signaling of the remote terminal by using the first sidelink RLC bearer and forwarding the uplink Uu signaling to the network-side device by using the first Uu RLC bearer;
   and/or
receiving downlink Uu signaling of the remote terminal from the network-side device by using the first Uu RLC bearer, and forwarding the downlink Uu signaling to the remote terminal by using the first sidelink RLC bearer.

The uplink Uu signaling may be at least one of the following: an RRC connection setup request, an RRC connection setup complete, a reconfiguration complete, various existing uplink RRC signaling on a Uu interface, and related NAS signaling.

In this embodiment of the present invention, optionally, the uplink Uu signaling and the downlink Uu signaling may be transmitted by a bidirectional acknowledged mode (AM) RLC entity in different directions on a same sidelink RLC bearer. Certainly, the uplink Uu signaling and the downlink Uu signaling may alternatively be transmitted by using different sidelink RLC bearers.

In this embodiment of the present invention, optionally, a mapping relationship between the first sidelink RLC bearer and the first Uu RLC bearer is configured by the network-side device or the relay terminal.

The first Uu RLC bearer and the first sidelink RLC bearer may be in a one-to-many mapping relationship or a one-to-one mapping relationship.

In this embodiment of the present invention, the first sidelink RLC bearer used to carry signaling may be established or configured in an implicit manner or an explicit manner.

Implicit means that once it is determined that a relay operation can be started between the remote terminal and the relay terminal, the remote terminal and the relay terminal establish first sidelink RLC bearers based on a default configuration, and then use the first sidelink RLC bearers.

Explicit means that a first sidelink RLC bearer and a related configuration are added through signaling exchange. Such configuration is generally sent by the relay terminal to the remote terminal and is generally initiated when or after the relay terminal agrees to provide a relay function for the remote terminal; or may be configured based on a Uu RLC bearer after the relay terminal receives a relay function request sent by a network-side device for accepting the remote terminal or after the relay terminal receives a Uu RLC bearer configuration of the network-side device.

The Uu signaling bearers of the remote terminal on the PC5 interface and the Uu interface may be consistently configured, or may be separately configured, for example, configuring a DRB RLC bearer for the Uu interface and an SRB RLC bearer for the PC5 interface.

It should also be noted that in a case that the relay terminal is connected to a plurality of remote terminals, because a PC5 link (link) is maintained independently for each remote terminal, both a DRB0 RLC bearer and a DRB 1 RLC bearer can be used on the PC5 link of each remote terminal to carry Uu RRC signaling and NAS signaling. The links are different endpoints which can be distinguished by the relay terminal. In addition, the relay terminal needs to maintain mapping relationships between the DRB0 RLC bearer and DRB1 RLC bearer of the remote terminal and a DRB32/33 RLC bearer (the first remote terminal that performs access), a DRB34/35 RLC bearer (the second remote terminal that performs access), ..., on the Uu interface.

In this embodiment of the present invention, optionally, before the establishing the first sidelink RLC bearer with the remote terminal, the method further includes:
sending the configuration information of the first sidelink RLC bearer on a remote terminal side to the remote terminal.

It should be noted that although a sidelink RLC bearer is established between the relay terminal and the remote terminal, configuration information on the relay terminal side and the remote terminal side may be different, for example, a configuration of a sending end on one side and a configuration of a receiving end on the other side. For example, a direction from the remote terminal to the relay terminal is referred to as uplink, and a direction from the relay terminal to the remote terminal is referred to as downlink. In such case, an uplink sending parameter and a downlink receiving parameter are configured on the remote terminal side, and a downlink sending parameter and an uplink receiving parameter are configured on the relay terminal side. Therefore, specific content of the parameters is different, but configuration content is coordinated on the two sides. For example, RLC sequence numbers (SN) received and sent in each direction must be the same, respective parameters of uplink and downlink such as RLC SNs are allowed to be the same or different, and sending and receiving operations in both directions are completed through coordination between the two sides.

In this embodiment of the present invention, optionally, the configuration information of the first sidelink RLC bearer is determined in at least one of the following manners:
(1) being configured by the network-side device

In the case of being configured by the network-side device, the configuration information of the first sidelink RLC bearer is sent by the network-side device to the relay terminal, and then forwarded by the relay terminal to the remote terminal.

In some embodiments of the present invention, optionally, the network-side device may configure both the first Uu RLC bearer and the first sidelink RLC bearer. That means, the first configuration information sent by the network-side device to the relay terminal may include the configuration information of the first Uu RLC bearer and the configuration information of the first sidelink RLC bearer.

In some other embodiments of the present invention, optionally, the relay terminal may also send a second relay request to the network-side device individually, to request the network-side device to configure a sidelink RLC bearer for transmitting the Uu signaling of the remote terminal. In this case, the network-side device may separately send the configuration information of the first sidelink RLC bearer to the relay terminal.
(2) being configured by the relay terminal
(3) being specified by a protocol

In this embodiment of the present invention, optionally, the being configured by the relay terminal includes at least one of the following or a combination thereof:
(1) being configured by the relay terminal after the relay terminal agrees to provide a relay service for the remote terminal

In this embodiment of the present invention, optionally, before the relay terminal sends the first relay request to the network-side device, the method further includes: receiving a relay request sent by the remote terminal, where the relay request is used to request the relay terminal to provide a relay service for the remote terminal. After the relay terminal agrees to provide the relay service for the remote terminal, the relay terminal can configure the configuration information of the first sidelink RLC bearer, for example, based on a default parameter of a protocol.
(2) being configured by the relay terminal after the relay terminal is accepted by the network-side device as a relay terminal;

In this embodiment of the present invention, optionally, after receiving the first relay request sent by the relay terminal, the network-side device sends the configuration information of the first Uu RLC bearer to the relay terminal, where the configuration information of the first Uu RLC bearer may carry relay function confirmation information used for confirming that the terminal is accepted as a relay terminal. Alternatively, the configuration information of the first Uu RLC bearer may not carry the foregoing relay function confirmation information. After receiving the configuration information of the first Uu RLC bearer, the relay terminal considers that it has been accepted by the network-side device as a relay terminal. After the network-side device accepts the terminal as a relay terminal, the relay terminal may configure the configuration information of the first sidelink RLC bearer, for example, based on the configuration information of the first Uu RLC bearer.
(3) being configured by the relay terminal after the relay terminal receives the configuration information of the first Uu RLC bearer

Optionally, the relay terminal performs configuration based on the configuration information of the first Uu RLC bearer.
(4) being configured by the relay terminal based on the configuration information of the first Uu RLC bearer
(5) being configured by the relay terminal based on a default parameter of a protocol
(1) to (3) specify when the relay terminal configures the first sidelink RLC bearer, and (4) and (5) specify how the relay terminal configures the first sidelink RLC bearer.

As mentioned in the foregoing embodiment, the relay terminal can receive the Uu signaling from the remote terminal by using the first sidelink RLC bearer established between the relay terminal and the remote terminal, or send, to the remote terminal, the Uu signaling sent by the network-side device to the remote terminal. In some other embodiments of the present invention, the Uu signaling of the remote terminal can be transmitted between the relay terminal and the remote terminal by using a sidelink RRC message. In other words, the method for remote terminal connection management further includes: receiving the Uu signaling of the remote terminal from the remote terminal by using a sidelink RRC message. In this solution, an existing sidelink RRC message can be used to carry the Uu signaling, which is easy to implement. The sidelink RRC message is an RRC message of a sidelink interface between the remote terminal and the relay terminal, which may also be referred to as a PC5-RRC message.

Optionally, the sidelink RRC message includes at least indication information of a type of the Uu signaling, and the type includes at least one of the following: RRC signaling and NAS signaling.

In this embodiment of the present invention, optionally, the first configuration information further includes: configuration information of the first Uu DRB RLC bearer, and the first Uu DRB RLC bearer is used to transmit service data of the remote terminal.

In other words, after receiving the first relay request sent by the relay terminal, the network-side device may configure both the first Uu RLC bearer used for transmitting the Uu signaling of the remote terminal and the first Uu DRB RLC bearer used for transmitting the service data of the remote terminal. The first Uu RLC bearer may be a Uu SRB RLC bearer or a Uu DRB RLC bearer.

The foregoing first Uu DRB RLC bearer may be a default Uu DRB RLC bearer first established by the network-side device for the remote terminal. For example, if the first relay request does not carry service information of the remote terminal, that is, the network-side device does not know the service information of the remote terminal, the network-side device may first establish the default Uu DRB RLC bearer for the remote terminal to transmit some simple service data. The default Uu DRB RLC bearer is used for data transmission in some special cases, for example, for some data transmissions when a dedicated DRB bearer that meets a QoS requirement has not been established; or the default DRB RLC bearer can be used to transmit service data of the remote terminal when the QoS requirement is not clear, or a DRB RLC bearer mapping to QoS cannot be found.

Certainly, the service information of the remote terminal may alternatively be carried in the first relay request. In this case, the first Uu DRB RLC bearer may be a Uu DRB RLC bearer that meets a QoS requirement of the service information of the remote terminal.

In some other embodiments of the present invention, if the network-side device configures no Uu DRB RLC bearer for transmitting remote data or configures only a default Uu DRB RLC bearer when configuring the first Uu RLC bearer, optionally, after the sending a first relay request to a network-side device, the method further includes:
sending a third relay request to the network-side device, where the third relay request is used to request the network-side device to configure a Uu RLC bearer for transmitting service data of the remote terminal; and
receiving configuration information of a second Uu DRB RLC bearer sent by the network-side device, where the second Uu DRB RLC bearer is used to transmit service data of the remote terminal.

That means, the second Uu DRB RLC bearer is a Uu DRB RLC bearer that meets a QoS requirement of the service information of the remote terminal.

Optionally, the third relay request includes at least one of the following information: an identifier of the remote terminal; and service information of the remote terminal.

Optionally, the service information includes at least one of the following: quality of service flow identifier (QFI); QoS profile; QoS parameter or QoS indicator; maximum flow bit rate (MBR/MFBR); and guaranteed flow bit rate (GBR/GFBR).

Optionally, the relay information includes at least one of the following: supported relay hop count; relay architecture option; and whether a multi-connectivity relay architecture is supported.

Referring to FIG. 4, an embodiment of the present invention further provides a method for remote terminal connection management, applied to a remote terminal. The method includes the following step.

Step 41: Transmit Uu signaling of the remote terminal to a relay terminal by using a first sidelink RLC bearer established between the remote terminal and the relay terminal or by using a sidelink RRC message.

Sidelink RLC bearer refers to bearers of an RLC layer and a lower layer thereof in a protocol stack of a sidelink interface (that is, a PC5 interface), excluding an upper layer of the RLC layer.

Optionally, the first sidelink RLC bearer is a sidelink DRB bearer or a sidelink SRB RLC bearer.

In this embodiment of the present invention, the remote terminal transmits the Uu signaling of the remote terminal to the relay terminal by using the first sidelink RLC bearer or by using the sidelink RRC message, and the relay terminal can complete forwarding of the Uu signaling between the remote terminal and a network-side device. In this way, a connection is established between the remote terminal and the network-side device for normal service transmission.

In this embodiment of the present invention, the Uu signaling of the remote terminal includes uplink Uu signaling sent by the remote terminal to the network-side device and/or downlink Uu signaling sent by the network-side device to the remote terminal.

In this embodiment of the present invention, the transmitting Uu signaling of the remote terminal to a relay terminal by using a first sidelink RLC bearer established between the remote terminal and the relay terminal includes:
sending, on the first sidelink RLC bearer, the uplink Uu signaling of the remote terminal to the relay terminal, and/or receiving, on the first sidelink RLC bearer, the downlink Uu signaling of the remote terminal forwarded by the relay terminal.

In this embodiment of the present invention, optionally, the uplink Uu signaling and the downlink Uu signaling may be transmitted by a bidirectional acknowledged mode (AM) RLC entity in different directions on a same sidelink RLC bearer. Certainly, the uplink Uu signaling and the downlink Uu signaling may alternatively be transmitted by using different sidelink RLC bearers.

In some other embodiments of the present invention, the remote terminal may add the Uu signaling of the remote terminal to an RRC message of the remote terminal and transmit it to the relay terminal in a manner of container (container). In this manner, optionally, the RRC message may carry at least one of the following information: an identifier of the remote terminal and indication information of a type of the Uu signaling of the remote terminal, where the type of the Uu signaling includes at least one of the following: radio resource control (RRC) signaling and non-access stratum (Non Access Stratum, NAS) signaling.

In this embodiment of the present invention, there may be one or more remote terminals connected to the relay terminal. If there is more than one remote terminal, optionally, Uu signaling of different remote terminals is transmitted by using different first sidelink RLC bearers; or Uu signaling of different remote terminals is transmitted by using a same first sidelink RLC bearer.

To distinguish different remote terminals, optionally, indication information is carried in the Uu signaling (for example, carried in a layer 2 protocol data unit (PDU) header) or sent together with the Uu signaling, where the indication information is used to indicate an identity of the remote terminal, for example, the identifier of the remote terminal. Optionally, whether to carry or send the indication information is configured by the network-side device.

In this embodiment of the present invention, there may be one or more types of Uu signaling of the remote terminal. For example, the Uu signaling of the remote terminal includes radio resource control (RRC) signaling and non-access stratum (Non Access Stratum, NAS) signaling.

In this embodiment of the present invention, Uu RRC signaling of the remote terminal is RRC signaling between the remote terminal and the network-side device. Uu NAS signaling of the remote terminal is NAS signaling between the remote terminal and a core network node, an access and mobility management function (Access and Mobility Management Function, AMF). Signaling is end-to-end, that is, directly transmitted between two endpoints.

In this embodiment of the present invention, optionally, different types of Uu signaling of a same remote terminal is transmitted by using a same first sidelink RLC bearer; or different types of Uu signaling of a same remote terminal is transmitted by using different first sidelink RLC bearers.

To distinguish different types of signaling, optionally, indication information is carried in the Uu signaling (for example, carried in a layer 2 protocol data unit (PDU) header) or sent together with the Uu signaling, where the indication information is used to indicate a service type of the Uu signaling. Optionally, whether to carry or send the indication information is configured by the network-side device.

In this embodiment of the present invention, before the transmitting Uu signaling of the remote terminal to a relay terminal by using a first sidelink RLC bearer established between the remote terminal and the relay terminal, the method further includes:
establishing the first sidelink RLC bearer between the remote terminal and the relay terminal based on configuration information of the first sidelink RLC bearer on a remote terminal side.

Optionally, the configuration information of the first sidelink RLC bearer is determined in the following manners: being configured by the network-side device; being configured by the relay terminal; and being specified by a protocol.

In the case of being configured by the network-side device, the configuration information of the first sidelink RLC bearer may be sent by the network-side device to the relay terminal, and then the configuration information of the first sidelink RLC bearer on the remote terminal side is sent by the relay terminal to the remote terminal.

The configuration information of the first sidelink RLC bearer includes: RLC configuration and MAC configuration, where the MAC configuration includes at least one of the following: logical channel identifier, logical channel priority, and prioritized bit rate.

In this embodiment of the present invention, optionally, before establishing the first sidelink RLC bearer between the remote terminal and the relay terminal, the method further includes: performing a relay related discovery procedure and/or connection establishment procedure between the relay terminal and the remote terminal. Optionally, the discovery procedure and/or connection establishment procedure is performed by using a signaling radio bearer of a PC5 link. For the specific process, refer to the description on the relay terminal side.

In this embodiment of the present invention, optionally, the method further includes: receiving configuration information of a first Uu bearer forwarded by the relay terminal, where the configuration information of the first Uu bearer includes only configuration information of a PDCP layer and an upper layer.

Referring to FIG. 5, an embodiment of the present invention further provides a method for remote terminal connection management, applied to a network-side device. The method includes the following steps.

Step 51: Receive a first relay request sent by a relay terminal, where the first relay request is used to request the network-side device to perform relay function-related configuration.

Step 52: Send first configuration information to the relay terminal based on the first relay request, where the first configuration information includes configuration information of a first Uu RLC bearer, and the first Uu RLC bearer is used to transmit Uu signaling of a remote terminal.

Uu RLC bearer refers to bearers of an RLC layer and a lower layer thereof in a protocol stack of a Uu interface, excluding an upper layer of the RLC layer.

Optionally, the configuration information of the first Uu RLC bearer includes at least one of the following: RLC configuration and medium access control (MAC) configuration, where the MAC configuration includes at least one of the following: logical channel identifier (ID), logical channel priority, and prioritized bit rate (Prioritized Bit Rate, PBR).

Optionally, the first Uu RLC bearer is a Uu SRB RLC bearer or a Uu DRB RLC bearer.

In this embodiment of the present invention, the network-side device configures, based on a relay request sent by the relay terminal, a dedicated Uu RLC bearer between the network-side device and the relay terminal for transmitting the Uu signaling of the remote terminal. In this way, a connection is established between the remote terminal and the network-side device for normal service transmission.

In this embodiment of the present invention, the first configuration information may further include indication information for explicitly indicating that the relay terminal can perform a relay service.

In this embodiment of the present invention, the Uu signaling of the remote terminal includes uplink Uu signaling sent by the remote terminal to the network-side device and/or downlink Uu signaling sent by the network-side device to the remote terminal.

In this embodiment of the present invention, optionally, the method for remote terminal connection management may further include:
receiving uplink Uu signaling of the remote terminal sent by the relay terminal on the first Uu RLC bearer, and/or downlink Uu signaling of the remote terminal sent to the relay terminal on the first Uu RLC bearer.

In this embodiment of the present invention, optionally, the uplink Uu signaling and the downlink Uu signaling may be transmitted by a bidirectional acknowledged mode (AM) RLC entity in different directions on a same Uu RLC bearer. Certainly, the uplink Uu signaling and the downlink Uu signaling may alternatively be transmitted by using different Uu RLC bearers.

In this embodiment of the present invention, optionally, the Uu signaling of the remote terminal includes at least one of the following: RRC signaling and NAS signaling.

After parsing out the Uu RRC signaling of the remote terminal, the network-side device processes the Uu RRC signaling, performs related response or configuration, and transmits a downlink Uu RRC message in a downlink pipe for Uu RRC signaling of the remote terminal. After parsing out the NAS signaling of the remote terminal, the network-side device establishes a dedicated NAS signaling channel from the network-side device to a core network (such as an AMF entity) for the remote terminal, for example, an XG interface, for transmitting the NAS signaling of the remote terminal. A downlink NAS signaling transmission is similar.

### III. The following describes configuration of the Uu interface.

In this embodiment of the present invention, the network-side device provides corresponding configuration content based on information carried in the first relay request sent by the relay terminal.

Generally, if the relay terminal reports only relay indication information and/or an identifier of the remote terminal to the network-side device, the network-side device can only know that the relay terminal is going to perform a relay function, but does not know which data will be relayed. In this case, only the following two types of configurations can be provided.
(1) A bearer mode of the Uu signaling of the remote terminal on the Uu interface of the relay terminal and related configuration (that is, configuration information of the first Uu RLC bearer)

The Uu signaling of the remote terminal mainly includes the following two types of signaling.

One type is RRC signaling between the remote terminal and the network-side device, such as an RRC connection setup request/command/complete (RRC connection setup request, RRC connection setup, and RRC connection setup complete), and an RRC reconfiguration/complete (RRC reconfiguration and RRC reconfiguration complete). This type of messages are transmitted by using SRB1 in a case that a terminal is directly connected to the network-side device.

Another type is NAS signaling between the remote terminal and the core network, such as a service request, a registration, or an authentication management. This type of messages are transmitted in a manner of an RRC signaling container (Container) in SRB1 in a case that a terminal is directly connected to the network-side device. Alternatively, a dedicated SRB2 is established for transmitting NAS signaling.

In this case, because the remote terminal is not directly connected to the network-side device, RRC signaling and NAS signaling of the remote terminal need to be carried by a bearer of the relay terminal. However, SRB1 and SRB2 of the relay terminal are dedicated to transmitting RRC messages and NAS messages of the relay terminal, and are not suitable for directly transmitting a message related to the remote terminal. Therefore, it is necessary to transmit an RRC message and a NAS message of the remote terminal in a different way from the relay terminal or other remote terminals.

Herein, the network-side device needs to provide related configurations, mainly including the following methods.

Method 1: A Uu RLC bearer dedicated for a new SRB is established for carrying the RRC signaling and NAS signaling of the remote terminal.

For example, a Uu RLC bearer of SRB4 is configured (the configuration starts from SRB4 because SRB0 is used for RRC signaling transmission on a common control channel (Common Control Channel, CCCH) of the relay terminal; SRB 1 is used for RRC signaling transmission on a dedicated control channel (Dedicated Control Channel, DCCH); SRB2 is used for NAS signaling; and SRB3 is used for RRC signaling transmission in a secondary cell group (Secondary Cell Group, SCG), and all the foregoing SRBs have been occupied). An SRB4 RLC bearer is used to carry the RRC signaling of the remote terminal, and an SRB5 RLC bearer is used to carry the NAS signaling of the remote terminal. The SRB4 RLC bearer, the SRB5 RLC bearer, and corresponding configuration information thereof (an SRB uses an AM transmission mode and has a default SN length and the like) are added to reconfiguration signaling of the relay terminal. It is indicated that the SRB4 RLC bearer and the SRB5 RLC bearer are used for transmitting the RRC signaling and NAS signaling of the remote terminal respectively, or it is indicated implicitly by using a default manner or a protocol-specified manner.

In a case that the relay terminal supports more than one remote terminal, SRB6 and SRB7 RLC bearers may be established for the second remote terminal that performs access, for transmitting RRC signaling and NAS signaling, and mapping relationships between each newly established SRB, a remote terminal ID, and an RRC/NAS message are indicated. Alternatively, the SRB4 RLC bearer and the SRB5 RLC bearer may be directly reused to transmit RRC messages and NAS messages of all the remote terminals. If a pair of SRB4 RLC bearer and SRB5 RLC bearer are reused by all the remote terminals, signaling needs to specify a remote terminal to which the message belongs, for example, by explicitly carrying a remote terminal ID.

In other words, if there is more than one remote terminal, Uu signaling of different remote terminals is transmitted by using different first Uu RLC bearers; or Uu signaling of different remote terminals is transmitted by using a same first Uu RLC bearer. To distinguish different remote terminals, optionally, indication information is carried in the Uu signaling (for example, carried in a layer 2 protocol data unit (PDU) header) or sent together with the Uu signaling, where the indication information is used to indicate an identity of the remote terminal, for example, the identifier of the remote terminal. Optionally, whether to carry or send the indication information is configured by the network-side device.

In addition, to reduce SRB RLC bearers, the RRC signaling and NAS signaling of the remote terminal may alternatively be transmitted on one SRB RLC bearer in two manners:
explicitly indicating a format: for example, specifying whether the signaling is RRC signaling or NAS signaling; and
encapsulating NAS signaling into RRC signaling: for example, UL Information Transfer and DL Information Transfer in an RRC message are used for encapsulating uplink and downlink NAS messages respectively.

In conclusion, the simplest manner is to configure different SRB RLC bearers for an RRC message and a NAS message of each remote terminal. An advantage of this manner is clear division of pipes, making clear data parsed from each SRB RLC bearer belongs to RRC or NAS of which remote terminal, without having to carry distinction information in each signaling. On such basis, to further reduce SRB RLC bearers, an SRB RLC bearer may be reused for information of different remote terminals, or NAS and RRC are transmitted on one SRB RLC bearer. In this case, if signaling that uses the same SRB RLC bearer belongs to different remote terminals, each signaling needs to carry a remote terminal ID, and if the signaling belongs to different types, a NAS/RRC type also needs to be distinguished.

That is, different types of Uu signaling of a same remote terminal is transmitted by using a same first Uu RLC bearer; or different types of Uu signaling of a same remote terminal is transmitted by using different first Uu RLC bearers. To distinguish different types of signaling, optionally, indication information is carried in the Uu signaling (for example, carried in a layer 2 protocol data unit (PDU) header) or sent together with the Uu signaling, where the indication information is used to indicate a service type of the Uu signaling. Optionally, whether to carry or send the indication information is configured by the network-side device.

Method 2: A dedicated DRB RLC bearer is established for carrying the RRC signaling and NAS signaling of the remote terminal.

For example, a DRB5 RLC bearer is configured for carrying the RRC signaling of the remote terminal, and a DRB6 RLC bearer is configured for carrying the NAS signaling of the remote terminal. DRB5, DRB6, and corresponding configuration information thereof (a DRB RLC bearer used for signaling transmission generally uses an AM transmission mode, and can use an SN length equal to a default SN length of an SRB or a specially-configured SN length, and the like) are added to reconfiguration signaling of the relay terminal. It is indicated that the DRB5 RLC bearer and the DRB6 RLC bearer are used for transmitting the RRC signaling and NAS signaling of the remote terminal respectively, or it is indicated implicitly by using a default manner or a protocol-specified manner. Herein, the DRB5 RLC bearer and the DRB6 RLC bearer are merely examples for distinguishing from a DRB of the relay terminal for carrying data. If DRB1 to DRB4 have been established, a DRB5/6 RLC bearer can be established. Alternatively, an existing DRB may be reserved for the relay terminal. For example, the relay terminal uses DRBs 0 to 31, and other remote terminals use DRBs 32, 33, and so on.

In a case that the relay terminal supports more than one remote terminal, DRB7 and DRB8 may be established for the second remote terminal that performs access, for transmitting RRC signaling and NAS signaling, and mapping relationships between each newly established DRB RLC bearer, a remote terminal ID, and an RRC/NAS message are indicated. Alternatively, the DRB5 RLC bearer and the DRB6 RLC bearer may be directly reused to transmit RRC messages and NAS messages of all the remote terminals. If a pair of DRB5 RLC bearer and DRB6 RLC bearer are reused by all the remote terminals, signaling needs to specify a remote terminal to which the message belongs, for example, by explicitly carrying a remote terminal ID.

In addition, to reduce DRB RLC bearers, the RRC signaling and NAS signaling of the remote terminal may alternatively be transmitted on one DRB RLC bearer in two manners:
explicitly indicating a format: for example, specifying whether the signaling is RRC signaling or NAS signaling; and
encapsulating NAS signaling into RRC signaling: for example, UL Information Transfer and DL Information Transfer in an RRC message are used for encapsulating uplink and downlink NAS messages respectively.

In conclusion, the simplest manner is to configure different DRB RLC bearers for an RRC message and a NAS message of each remote terminal. An advantage of this manner is clear division of pipes, making clear data parsed from each DRB RLC bearer belongs to RRC or NAS of which remote terminal, without having to carry distinction information in each signaling. On such basis, to further reduce DRB RLC bearers, a DRB RLC bearer may be reused for information of different remote terminals, or NAS and RRC are transmitted on one DRB RLC bearer. In this case, if signaling that use the same DRB RLC bearer belongs to different remote terminals, each signaling needs to carry a remote terminal ID, and if the signaling belongs to different types, a NAS/RRC type also needs to be distinguished.

(2) Default bearer information and configuration that can be used by data of the remote terminal on the Uu interface of the relay terminal

The remote terminal is connected to the relay terminal for data exchange with the network-side device, and therefore the network-side device can first establish, for the remote terminal, a default Uu DRB RLC bearer for data transmission in some special cases, for example, for some data transmissions in a case that a dedicated DRB bearer that meets a QoS requirement has not been established; or the default DRB RLC bearer can be used to transmit data of the remote terminal in a case that a QoS requirement is not clear, or a DRB RLC bearer mapping to QoS cannot be found.

The default DRB RLC bearer is an optional configuration, and it is also possible that a signaling bearer pipe is established first, and a data DRB RLC bearer is configured after a service requirement is reported.

That is, in this embodiment of the present invention, optionally, the first configuration information further includes: configuration information of the first Uu DRB RLC bearer, and the first Uu DRB RLC bearer is used to transmit service data of the remote terminal. In other words, after receiving the first relay request sent by the relay terminal, the network-side device may configure both the first Uu RLC bearer used for transmitting the Uu signaling of the remote terminal and the first Uu DRB RLC bearer used for transmitting the service data of the remote terminal. The first Uu RLC bearer may be a Uu SRB RLC bearer or a Uu DRB RLC bearer.

It should be noted that when the Uu signaling of the remote terminal is transmitted through the Uu interface of the relay terminal, the relay terminal only needs to perform an L2 related forwarding operation, that is, both an SRB RLC bearer and a DRB RLC bearer only have protocol stacks and configurations of an RLC/MAC layer and a lower layer. The biggest difference between the SRB RLC bearer and the DRB RLC bearer is whether an RLC bearer identifier or a logical channel identifier can reflect an SRB or DRB attribute, that is, whether it is necessary to distinguish whether an RLC bearer carrying signaling is an SRB or a DRB. An advantage of the distinction is that a special operation can be performed on the SRB RLC bearer, for example, the SRB RLC bearer has a higher processing priority, allows data to be transmitted prior to normal data, and has an infinite PBR (guaranteed bit rate) by default. If the SRB/DRB attribute is not distinguished, a unified RLC bearer ID/LCID number range may be used, but a higher priority and an infinite PBR are configured for the RLC bearer carrying signaling.

After the foregoing signaling bearer and/or default data bearer is established, the uplink and downlink RRC signaling, the uplink and downlink NAS signaling, and simple data of the remote terminal can be transmitted through the Uu interface.

In this embodiment of the present invention, optionally, the method further includes: sending configuration information of a first sidelink RLC bearer to the relay terminal, where the first sidelink RLC bearer is used to transmit Uu signaling of the remote terminal, and the first sidelink RLC bearer has a mapping relationship with the first Uu RLC bearer. Optionally, the mapping relationship is configured by the network-side device.

Further optionally, the configuration information of the first sidelink RLC bearer is located in the first configuration information. To be specific, the network-side device configures both the configuration information of the first Uu RLC bearer and the configuration information of the first sidelink RLC bearer, and sends the configuration information to the relay terminal.

In some other embodiments of the present invention, before the sending configuration information of a first sidelink RLC bearer to the relay terminal, the method further includes:
receiving a second relay request sent by the relay terminal, where the second relay request is used to request the network-side device to configure a sidelink RLC bearer for transmitting the Uu signaling of the remote terminal.

In this case, the network-side device separately sends the configuration information of the first sidelink RLC bearer to the relay terminal based on the second relay request.

In some other embodiments of the present invention, if the network-side device configures no Uu DRB RLC bearer for transmitting remote data or configures only a default Uu DRB RLC bearer when configuring the first Uu RLC bearer, optionally, after the receiving the first relay request sent by the relay terminal, the method further includes:
receiving a third relay request sent by the relay terminal, where the third relay request is used to request the network-side device to configure a Uu RLC bearer for transmitting service data of the remote terminal; and
sending configuration information of a second Uu DRB RLC bearer to the relay terminal based on the third relay request, where the second Uu DRB RLC bearer is used to transmit service data of the remote terminal.

In other words, the second Uu DRB RLC bearer is a Uu DRB RLC bearer that meets a QoS requirement of service information of the remote terminal.

Optionally, the third relay request includes at least one of the following information: an identifier of the remote terminal; and service information of the remote terminal.

Optionally, the service information includes at least one of the following: quality of service flow identifier (QFI); QoS profile; QoS parameter or QoS indicator; maximum flow bit rate (MBR/MFBR); and guaranteed flow bit rate (GBR/GFBR).

Optionally, the relay information includes at least one of the following: supported relay hop count; relay architecture option; and whether a multi-connectivity relay architecture is supported.

In this embodiment of the present invention, optionally, the method further includes: sending configuration information of a first Uu bearer of the network-side device and the remote terminal to the relay terminal, where the configuration information of the first Uu bearer includes only configuration information of a PDCP layer and an upper layer.

In this embodiment of the present invention, after a special signaling bearer of a PC5 interface (which is an SRB/DRB RLC bearer used for transmitting RRC signaling or NAS signaling of the remote terminal) is established, the remote terminal can use the SRB/DRB RLC bearer to send an RRC message to the network-side device, for example, sending RRC uplink signaling. An establishment request carries a special cause value, for example, remote indicator, indicating an access performed by a remote UE. Alternatively, because a remote UE RRC message is sent to the network-side device by using an RLC bearer of the relay terminal, the network-side device can know that the message comes from a remote terminal, so that the network-side device performs special configuration for the remote terminal. A special feature is as follows.

Because the remote terminal is not directly connected to the network-side device, there is no need to configure a Uu L3 radio bearer of the remote terminal like for a common access terminal, or only configuration parameters of a PDCP layer and an upper layer need to be configured for the SRB/DRB bearer, and Uu configurations of an RLC layer and a lower layer do not need to be configured.

Special configuration is performed on the remote terminal, for example, a PC5 link configuration of the remote terminal, which mainly includes configurations of the RLC layer and the lower layer of the Uu bearer on the PC5 interface, and how data sent by the remote terminal to a network is mapped on a PC5 SLRB.

As described above, for the RRC signaling or NAS signaling of the remote terminal, an end-to-end bearer is established on the PDCP layer and the upper layer, that is, between the remote terminal and the network-side device, end-to-end security, encryption, and integrity protection are implemented. All signaling procedures are similar to those of a Uu terminal, except that configuration information is sent by using an RLC bearer between the remote terminal and the relay terminal, and uplink and downlink transmission is performed by using an RLC bearer between the relay terminal and the network-side device.

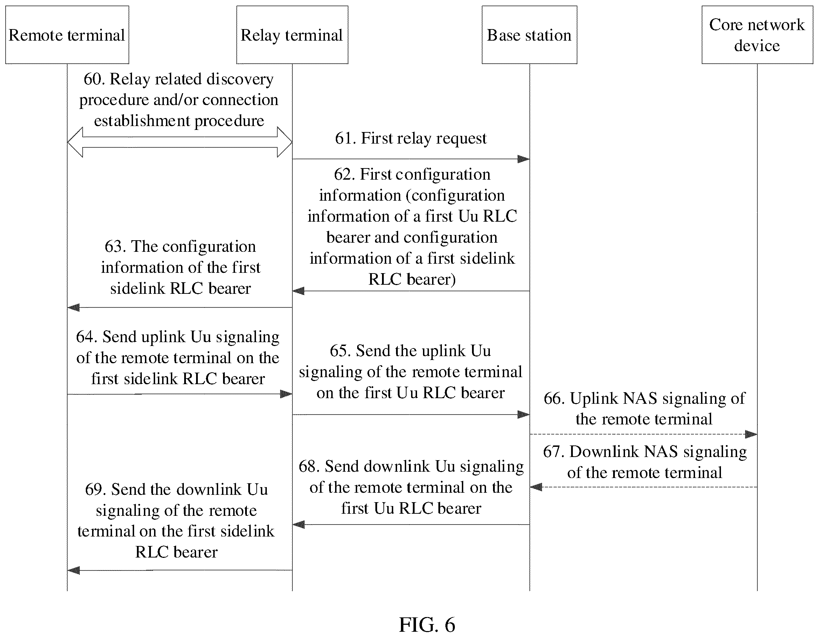

Referring to FIG. 6, FIG. 6 is a schematic flowchart of a method for remote terminal connection management according to another embodiment of the present invention. The method includes the following steps.

Step 60: Perform a relay related discovery procedure and/or connection establishment procedure between a relay terminal and a remote terminal.

For details, refer to the related description on the relay terminal side.

Step 61: The relay terminal sends a first relay request to a base station (that is, the network-side device), where the first relay request is used to request the base station to perform relay function-related configuration.

Step 62: The base station sends first configuration information to the relay terminal, where the first configuration information includes: configuration information of a first Uu RLC bearer and a first sidelink RLC bearer, and the first Uu RLC bearer and the first sidelink RLC bearer are used to transmit Uu signaling of the remote terminal.

Step 63: The relay terminal sends the configuration information of the first sidelink RLC bearer on a remote terminal side to the remote terminal.

When a configuration of the first sidelink RLC bearer needs to be generated based on a configuration of a Uu RLC bearer, or needs to be configured only after the network-side device accepts the remote terminal, step 63 needs to be performed after step 62. However, it is not excluded that step 63 is performed following step 60, that is, the first sidelink RLC bearer may be configured when the relay terminal agrees to provide a relay service for the remote terminal. In this way, operations are performed concurrently on the Uu interface and the PC5 interface, reducing delay.

Step 64: The remote terminal sends uplink Uu signaling of the remote terminal on the first sidelink RLC bearer.

Step 65: After receiving the uplink Uu signaling of the remote terminal, the relay terminal sends the uplink Uu signaling of the remote terminal on the first Uu RLC bearer.

Step 66: If the uplink Uu signaling of the remote terminal is uplink NAS signaling, the base station sends the uplink NAS signaling of the remote terminal to a core network device.

Step 67: The base station receives downlink NAS signaling of the remote terminal sent by the core network device.

Step 68: The base station sends downlink Uu signaling of the remote terminal on the first Uu RLC bearer.

Step 69: After receiving the downlink Uu signaling of the remote terminal, the relay terminal sends the downlink Uu signaling of the remote terminal on the first sidelink RLC bearer.

In this way, a bearer configuration process of Uu RRC signaling and NAS signaling from the remote terminal to the network-side device on the sidelink interface and the Uu interface is completed. The remote terminal can use a configured bearer to transmit the Uu RRC signaling and NAS signaling. Similar to an existing UE process, transmitted signaling may carry a special indication of remote terminal to notify the base station or the core network that the signaling comes from a remote terminal.

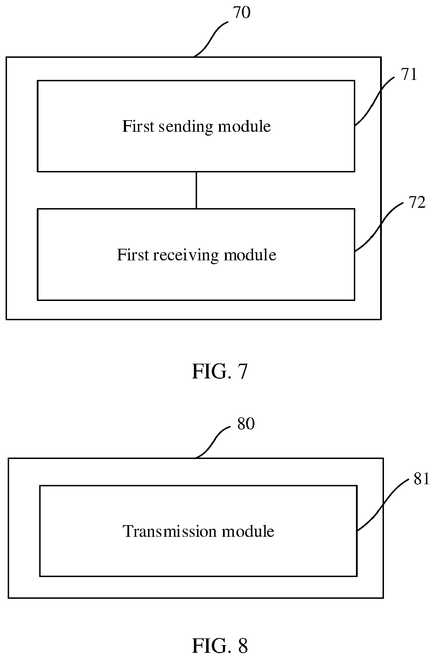

Referring to FIG. 7, an embodiment of the present invention further provides a terminal 70, including:
a first sending module 71, configured to send a first relay request to a network-side device, where the first relay request is used to request the network-side device to perform relay function-related configuration; and
a first receiving module 72, configured to receive first configuration information sent by the network-side device, where the first configuration information includes: configuration information of a first Uu radio link control RLC bearer, and the first Uu RLC bearer is used to transmit Uu signaling of a remote terminal.

Optionally, the first Uu RLC bearer is a Uu SRB RLC bearer or a Uu DRB RLC bearer.

Optionally, if there is more than one remote terminal, Uu signaling of different remote terminals is transmitted by using different first Uu RLC bearers; or Uu signaling of different remote terminals is transmitted by using a same first Uu RLC bearer.

Optionally, different types of Uu signaling of a same remote terminal is transmitted by using a same first Uu RLC bearer; or different types of Uu signaling of a same remote terminal is transmitted by using different first Uu RLC bearers.

Optionally, at least one of the following indication information is carried in the Uu signaling or sent simultaneously with the Uu signaling: an identifier of the remote terminal; and a type of the Uu signaling.

Optionally, whether to carry or send the indication information is configured by the network-side device.

Optionally, the first sending module is configured to:
if the relay terminal is in an idle state, adding the first relay request to a radio resource control RRC connection setup request to be sent to the network-side device, or adding the first relay request to an RRC connection setup complete to be sent to the network-side device, or sending the first relay request through first uplink signaling after RRC connection setup is completed;
   and/or
if the relay terminal is in an inactive state, adding the first relay request to an RRC connection resume request to be sent to the network-side device, or adding the first relay request to an RRC connection resume complete to be sent to the network-side device, or sending the first relay request through first uplink signaling after RRC connection resume is completed;
   and/or
if the relay terminal is in an RRC connected state, sending the first relay request through first uplink signaling.

Optionally, the terminal further includes: an establishment module, configured to establish, based on configuration information of a first sidelink RLC bearer on a relay terminal side, the first sidelink RLC bearer between the terminal and the remote terminal, where the first sidelink RLC bearer is used to transmit Uu signaling of the remote terminal, and the first sidelink RLC bearer has a mapping relationship with the first Uu RLC bearer.

Optionally, the mapping relationship is configured by the network-side device or the relay terminal.

Optionally, the first sidelink RLC bearer is a sidelink DRB bearer or a sidelink SRB RLC bearer.

Optionally, the terminal further includes: a second sending module, configured to send the configuration information of the first sidelink RLC bearer on a remote terminal side to the remote terminal.

Optionally, the configuration information of the first sidelink RLC bearer is determined in at least one of the following manners: being configured by the network-side device; being configured by the relay terminal; and being specified by a protocol.

Optionally, the relay terminal configuration includes at least one of the following:
being configured by the relay terminal after the relay terminal agrees to provide a relay service for the remote terminal;
being configured by the relay terminal after the relay terminal is accepted by the network-side device as a relay terminal;
being configured by the relay terminal after the relay terminal receives the configuration information of the first Uu RLC bearer;
being configured by the relay terminal based on the configuration information of the first Uu RLC bearer; and
being configured by the relay terminal based on a default parameter of a protocol.

Optionally, the configuration information of the first Uu RLC bearer and the first sidelink RLC bearer includes at least one of the following: RLC configuration and MAC configuration, where the MAC configuration includes at least one of the following: logical channel identifier, logical channel priority, and prioritized bit rate.

Optionally, the terminal further includes: a transmission module, configured to receive the Uu signaling of the remote terminal from the remote terminal by using a sidelink RRC message.

Optionally, the sidelink RRC message includes at least indication information of a type of the Uu signaling, and the type includes at least one of the following: RRC signaling and non-access stratum NAS signaling.

Optionally, the first configuration information further includes: configuration information of the first Uu DRB RLC bearer, and the first Uu DRB RLC bearer is used to transmit service data of the remote terminal.

Optionally, the terminal further includes:
a third sending module, configured to send a third relay request to the network-side device, where the third relay request is used to request the network-side device to configure a Uu RLC bearer for transmitting service data of the remote terminal; and
a second receiving module, configured to receive configuration information of a second Uu DRB RLC bearer sent by the network-side device, where the second Uu DRB RLC bearer is used to transmit service data of the remote terminal.

Optionally, the first relay request includes at least one of the following:
relay indication information, where the relay indication information is used to indicate that a current message is the first relay request;
an identifier of the remote terminal;
service information of the remote terminal; and
relay information.

Optionally, the third relay request includes at least one of the following information:
an identifier of the remote terminal; and
service information of the remote terminal.

Optionally, the service information includes at least one of the following: QFI; QoS profile; QoS parameter or QoS indicator; MBR/MFBR; and GBR/GFBR.

Optionally, the relay information includes at least one of the following: supported relay hop count; relay architecture option; and whether a multi-connectivity relay architecture is supported.

Optionally, the terminal further includes: a connection module, configured to perform a relay related discovery procedure and/or connection establishment procedure between the terminal and the remote terminal.

Optionally, the discovery procedure and/or connection establishment procedure is performed by using a signaling radio bearer of a PC5 link.

The terminal provided in this embodiment of the present invention can implement the processes implemented by the terminal in the method embodiment in FIG. 3. To avoid repetition, details are not described herein again.

Referring to FIG. 8, an embodiment of the present invention further provides a terminal 80, including:
a transmission module 81, configured to transmit Uu signaling of a remote terminal to a relay terminal by using a first sidelink RLC bearer established between the remote terminal and the relay terminal or by using a sidelink RRC message.

Optionally, the first sidelink RLC bearer is a sidelink DRB bearer or a sidelink SRB RLC bearer.

Optionally, the terminal further includes: an establishment module, configured to establish the first sidelink RLC bearer between the terminal and the relay terminal based on configuration information of the first sidelink RLC bearer on a remote terminal side.

Optionally, the configuration information of the first sidelink RLC bearer is determined in the following manners: being configured by a network-side device; being configured by the relay terminal; and being specified by a protocol.

Optionally, the configuration information of the first sidelink RLC bearer includes: RLC configuration and MAC configuration, where the MAC configuration includes at least one of the following: logical channel identifier, logical channel priority, and prioritized bit rate.

Optionally, the sidelink RRC message includes at least indication information of a type of the Uu signaling of the remote terminal, and the type includes at least one of the following: RRC signaling and NAS signaling.

Optionally, the terminal further includes: a connection module, configured to perform a relay related discovery procedure and/or connection establishment procedure between the terminal and the relay terminal.

Optionally, the discovery procedure and/or connection establishment procedure is performed by using a signaling radio bearer of a PC5 link.

Optionally, the terminal further includes: a receiving module, configured to receive configuration information of a first Uu bearer forwarded by the relay terminal, where the configuration information of the first Uu bearer includes only configuration information of a PDCP layer and an upper layer.

The terminal provided in this embodiment of the present invention can implement the processes implemented by the terminal in the method embodiment in FIG. 4. To avoid repetition, details are not described herein again.

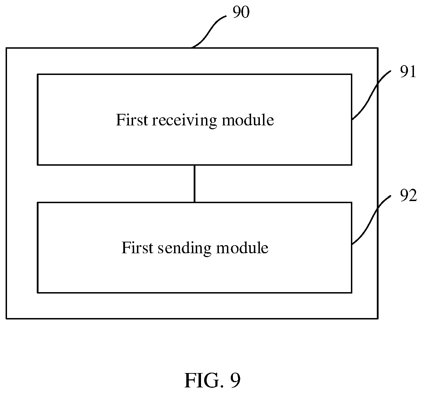

Referring to FIG. 9, an embodiment of the present invention further provides a network-side device 90, including:
a first receiving module 91, configured to receive a first relay request sent by a relay terminal, where the first relay request is used to request the network-side device to perform relay function-related configuration; and
a first sending module 92, configured to send first configuration information to the relay terminal based on the first relay request, where the first configuration information includes configuration information of a first Uu RLC bearer, and the first Uu RLC bearer is used to transmit Uu signaling of a remote terminal.

Optionally, the first Uu RLC bearer is a Uu SRB RLC bearer or a Uu DRB RLC bearer.

Optionally, if there is more than one remote terminal, Uu signaling of different remote terminals is transmitted by using different first Uu RLC bearers; or Uu signaling of different remote terminals is transmitted by using a same first Uu RLC bearer.

Optionally, different types of Uu signaling of a same remote terminal is transmitted by using a same first Uu RLC bearer; or different types of Uu signaling of a same remote terminal is transmitted by using different first Uu RLC bearers.

Optionally, at least one of the following indication information is carried in the Uu signaling or sent simultaneously with the Uu signaling: an identifier of the remote terminal; and a type of the Uu signaling.

Optionally, whether to carry or send the indication information is configured by the network-side device.

Optionally, the terminal further includes: a second sending module, configured to send configuration information of a first sidelink RLC bearer to the relay terminal, where the first sidelink RLC bearer is used to transmit Uu signaling of the remote terminal, and the first sidelink RLC bearer has a mapping relationship with the first Uu RLC bearer.

Optionally, the mapping relationship is configured by the network-side device.

Optionally, the first sidelink RLC bearer is a sidelink DRB bearer or a sidelink SRB RLC bearer.

Optionally, the configuration information of the first Uu RLC bearer and the first sidelink RLC bearer includes at least one of the following: RLC configuration and MAC configuration, where the MAC configuration includes at least one of the following: logical channel identifier, logical channel priority, and prioritized bit rate.

Optionally, the first configuration information further includes: configuration information of the first Uu DRB RLC bearer, and the first Uu DRB RLC bearer is used to transmit service data of the remote terminal.

Optionally, the terminal further includes:
a second receiving module, configured to receive a third relay request sent by the relay terminal, where the third relay request is used to request the network-side device to configure a Uu RLC bearer for transmitting service data of the remote terminal; and
a third sending module, configured to send configuration information of a second Uu DRB RLC bearer to the relay terminal based on the third relay request, where the second Uu DRB RLC bearer is used to transmit service data of the remote terminal.

Optionally, the terminal further includes: a fourth sending module, configured to send configuration information of a first Uu bearer of the network-side device and the remote terminal to the relay terminal, where the configuration information of the first Uu bearer includes only configuration information of a PDCP layer and an upper layer.

The terminal provided in this embodiment of the present invention can implement the processes implemented by the network-side device in the method embodiment in FIG. 5. To avoid repetition, details are not described herein again.

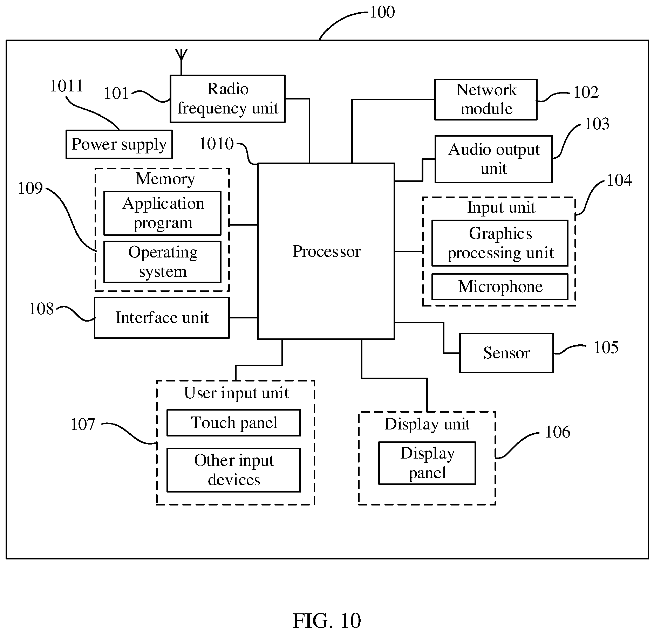

FIG. 10 is a schematic diagram of a hardware structure of a terminal for implementing the embodiments of the present invention. The terminal 100 includes but is not limited to components such as a radio frequency unit 101, a network module 102, an audio output unit 103, an input unit 104, a sensor 105, a display unit 106, a user input unit 107, an interface unit 108, a memory 109, a processor 1010, and a power supply 1011. A person skilled in the art can understand that the structure of the terminal shown in FIG. 10 does not constitute a limitation on the terminal. The terminal may include more or fewer components than those shown in the figure, or some components are combined, or component arrangements are different. In this embodiment of the present invention, the terminal includes but is not limited to a mobile phone, a tablet computer, a notebook computer, a palmtop computer, a vehicle-mounted terminal, a wearable device, a pedometer, or the like.

The radio frequency unit 101 is configured to send a first relay request to a network-side device, where the first relay request is used to request the network-side device to perform relay function-related configuration; and receive first configuration information sent by the network-side device, where the first configuration information includes configuration information of a first Uu radio link control RLC bearer, and the first Uu RLC bearer is used to transmit Uu signaling of a remote terminal;
or
the radio frequency unit 101 is configured to transmit Uu signaling of a remote terminal to a relay terminal by using a first sidelink RLC bearer established between the remote terminal and the relay terminal or by using a sidelink RRC message.

The terminal provided in this embodiment of the present invention can implement the processes implemented by the terminal in the method embodiment in FIG. 3 or FIG. 4. To avoid repetition, details are not described herein again.

In addition, the terminal 100 includes some functional modules that are not shown, which are not further described herein.

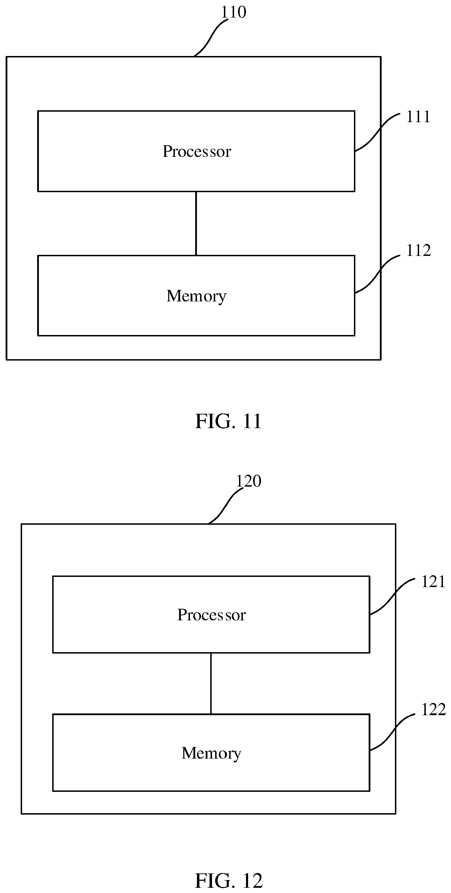

Referring to FIG. 11, an embodiment of the present invention further provides a terminal 110, including a processor 111, a memory 112, and a computer program stored in the memory 112 and capable of running on the processor 111. When the computer program is executed by the processor 111, the processes of the foregoing embodiments of the method for remote terminal connection management applied to the relay terminal are implemented, with the same technical effects achieved. To avoid repetition, details are not described herein again.

Referring to FIG. 12, an embodiment of the present invention further provides a terminal 120, including a processor 121, a memory 122, and a computer program stored in the memory 122 and capable of running on the processor 121. When the computer program is executed by the processor 121, the processes of the foregoing embodiments of the method for remote terminal connection management applied to the remote terminal are implemented, with the same technical effects achieved. To avoid repetition, details are not described herein again.

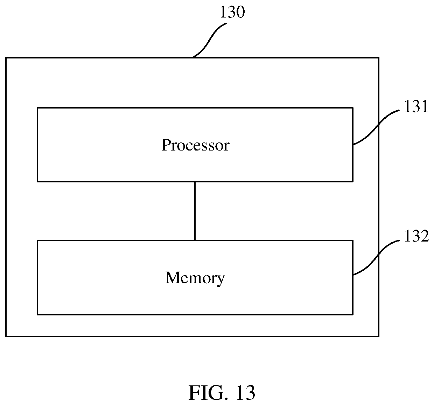

Referring to FIG. 13, an embodiment of the present invention further provides a network-side device 130, including a processor 131, a memory 132, and a computer program stored in the memory 132 and capable of running on the processor 131. When the computer program is executed by the processor 131, the processes of the foregoing embodiments of the method for remote terminal connection management applied to the network-side device are implemented, with the same technical effects achieved. To avoid repetition, details are not described herein again.

An embodiment of the present invention further provides a computer-readable storage medium, where a computer program is stored in the computer-readable storage medium. When the computer program is executed by a processor, the processes of the foregoing embodiments of the method for remote terminal connection management applied to the relay terminal are implemented, with the same technical effects achieved. To avoid repetition, details are not described herein again.

An embodiment of the present invention further provides a computer-readable storage medium, where a computer program is stored in the computer-readable storage medium. When the computer program is executed by a processor, the processes of the foregoing embodiments of the method for remote terminal connection management applied to the remote terminal are implemented, with the same technical effects achieved. To avoid repetition, details are not described herein again.

An embodiment of the present invention further provides a computer-readable storage medium, where a computer program is stored in the computer-readable storage medium. When the computer program is executed by a processor, the processes of the foregoing embodiments of the method for remote terminal connection management applied to the network-side device are implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a chip, including a processor and a communication interface, where the communication interface is coupled to the processor, and the processor is configured to run a program or instructions, so that each process of any one of the foregoing embodiments of the method for remote terminal connection management is implemented, with the same technical effects achieved. To avoid repetition, details are not described herein again.

It should be understood that the chip mentioned in this embodiment of this application may also be referred to as a system-on-chip, a system chip, a chip system, or the like.

It should be noted that in this specification, the terms "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a ..." does not preclude the existence of other identical elements in the process, method, article, or apparatus that includes the element.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

According to the foregoing description of the implementations, a person skilled in the art can clearly understand that the methods in the foregoing embodiments may be implemented by software in combination with a necessary common hardware platform, and certainly may alternatively be implemented by hardware. However, in most cases, the former is a more preferred implementation. Based on such an understanding, the technical solutions of the present invention essentially, or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

A person of ordinary skill in the art may understand that all or some of the processes of the methods in the embodiments may be implemented by a computer program controlling relevant hardware. The program may be stored in a computer-readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

It can be understood that the embodiments described in the embodiments of this disclosure may be implemented by hardware, software, firmware, middleware, microcode, or a combination thereof. For hardware implementation, modules, units, and subunits may be implemented in one or more application specific integrated circuits (Application Specific Integrated Circuit, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions described in this disclosure, or a combination thereof.

For software implementation, the technologies described in the embodiments of this disclosure may be implemented by modules (such as processes and functions) that perform the functions described in the embodiments of this disclosure. Software code may be stored in the memory and executed by the processor. The memory may be implemented inside the processor or outside the processor.

The embodiments of the present invention are described above with reference to the accompanying drawings, but the present invention is not limited to these specific implementations. The foregoing implementations are merely illustrative rather than restrictive. Inspired by the present invention, a person of ordinary skill in the art may develop many other manners without departing from the principle of the present invention and the protection scope of the claims. All such manners shall fall within the protection of the present invention.

## Claims

1. A method for remote terminal connection management, applied to a relay terminal and comprising:
sending a first relay request to a network-side device, wherein the first relay request is used to request the network-side device to perform relay function-related configuration; and
receiving first configuration information sent by the network-side device, wherein the first configuration information comprises configuration information of a first Uu radio link control RLC bearer, and the first Uu RLC bearer is used to transmit Uu signaling of a remote terminal.

2. The method according to claim 1, wherein the first Uu RLC bearer is a Uu signaling radio bearer SRB RLC bearer or a Uu data radio bearer DRB RLC bearer.

3. The method according to claim 1, wherein if there is more than one remote terminal,
Uu signaling of different remote terminals is transmitted by using different first Uu RLC bearers;
or
Uu signaling of different remote terminals is transmitted by using a same first Uu RLC bearer.

4. The method according to claim 1, wherein
different types of Uu signaling of a same remote terminal is transmitted by using a same first Uu RLC bearer;
or
different types of Uu signaling of a same remote terminal is transmitted by using different first Uu RLC bearers.

5. The method according to claim 3 or 4, wherein at least one of the following indication information is carried in the Uu signaling or sent simultaneously with the Uu signaling:
an identifier of the remote terminal; and
a type of the Uu signaling.

6. The method according to claim 5, wherein whether to carry or send the indication information is configured by the network-side device.

7. The method according to claim 1, wherein the sending a first relay request to a network-side device comprises:
if the relay terminal is in an idle state, adding the first relay request to a radio resource control RRC connection setup request to be sent to the network-side device, or adding the first relay request to an RRC connection setup complete to be sent to the network-side device, or sending the first relay request through first uplink signaling after RRC connection setup is completed;
and/or
if the relay terminal is in an inactive state, adding the first relay request to an RRC connection resume request to be sent to the network-side device, or adding the first relay request to an RRC connection resume complete to be sent to the network-side device, or sending the first relay request through first uplink signaling after RRC connection resume is completed;
and/or
if the relay terminal is in an RRC connected state, sending the first relay request through first uplink signaling.

8. The method according to claim 1, further comprising:
establishing, based on configuration information of a first sidelink sidelink RLC bearer on a relay terminal side, the first sidelink RLC bearer with the remote terminal, wherein the first sidelink RLC bearer is used to transmit Uu signaling of the remote terminal, and the first sidelink RLC bearer has a mapping relationship with the first Uu RLC bearer.

9. The method according to claim 8, wherein the mapping relationship is configured by the network-side device or the relay terminal.

10. The method according to claim 8, wherein the first sidelink RLC bearer is a sidelink DRB bearer or a sidelink SRB RLC bearer.

11. The method according to claim 8, wherein before the establishing the first sidelink RLC bearer with the remote terminal, the method further comprises:
sending the configuration information of the first sidelink RLC bearer on a remote terminal side to the remote terminal.

12. The method according to claim 8 or 11, wherein the configuration information of the first sidelink RLC bearer is determined in at least one of the following manners:
being configured by the network-side device;
being configured by the relay terminal; and
being specified by a protocol.

13. The method according to claim 12, wherein the being configured by the relay terminal comprises at least one of the following:
being configured by the relay terminal after the relay terminal agrees to provide a relay service for the remote terminal;
being configured by the relay terminal after the relay terminal is accepted by the network-side device as a relay terminal;
being configured by the relay terminal after the relay terminal receives the configuration information of the first Uu RLC bearer;
being configured by the relay terminal based on the configuration information of the first Uu RLC bearer; and
being configured by the relay terminal based on a default parameter of a protocol.

14. The method according to claim 8 or 11, wherein the configuration information of the first Uu RLC bearer and the configuration information of the first sidelink RLC bearer comprise at least one of the following:
RLC configuration; and
media access control MAC configuration, wherein the MAC configuration comprises at least one of the following: logical channel identifier, logical channel priority, and prioritized bit rate.

15. The method according to claim 1, further comprising:
receiving the Uu signaling of the remote terminal from the remote terminal by using a sidelink RRC message.

16. The method according to claim 15, wherein the sidelink RRC message comprises at least indication information of a type of the Uu signaling, and the type comprises at least one of the following: RRC signaling and non-access stratum NAS signaling.

17. The method according to claim 1, wherein the first configuration information further comprises: configuration information of a first Uu DRB RLC bearer, and the first Uu DRB RLC bearer is used to transmit service data of the remote terminal.

18. The method according to claim 1, wherein after the sending a first relay request to a network-side device, the method further comprises:
sending a third relay request to the network-side device, wherein the third relay request is used to request the network-side device to configure a Uu RLC bearer for transmitting service data of the remote terminal; and
receiving configuration information of a second Uu DRB RLC bearer sent by the network-side device, wherein the second Uu DRB RLC bearer is used to transmit service data of the remote terminal.

19. The method according to claim 1, wherein the first relay request comprises at least one of the following:
relay indication information, wherein the relay indication information is used to indicate that a current message is the first relay request;
an identifier of the remote terminal;
service information of the remote terminal; and
relay information.

20. The method according to claim 18, wherein the third relay request comprises at least one of the following:
an identifier of the remote terminal; and
service information of the remote terminal.

21. The method according to claim 19 or 20, wherein the service information comprises at least one of the following:
quality of service flow identifier QFI;
QoS profile;
QoS parameter or QoS indicator;
maximum flow bit rate MBR/MFBR; and
guaranteed flow bit rate GBR/GFBR.

22. The method according to claim 19, wherein the relay information comprises at least one of the following:
supported relay hop count;
relay architecture option; and
whether a multi-connectivity relay architecture is supported.

23. The method according to claim 1, wherein before the sending a first relay request to a network-side device, the method further comprises:
performing a relay related discovery procedure and/or connection establishment procedure between the relay terminal and the remote terminal.

24. The method according to claim 23, wherein the discovery procedure and/or connection establishment procedure is performed by using a signaling radio bearer of a PC5 link.

25. A method for remote terminal connection management, applied to a remote terminal and comprising:
transmitting Uu signaling of the remote terminal to a relay terminal by using a first sidelink RLC bearer established between the remote terminal and the relay terminal or by using a sidelink RRC message.

26. The method according to claim 25, wherein the first sidelink RLC bearer is a sidelink DRB bearer or a sidelink SRB RLC bearer.

27. The method according to claim 25, wherein before the transmitting Uu signaling of the remote terminal to a relay terminal by using a first sidelink RLC bearer established between the remote terminal and the relay terminal, the method further comprises:
establishing the first sidelink RLC bearer between the remote terminal and the relay terminal based on configuration information of the first sidelink RLC bearer on a remote terminal side.

28. The method according to claim 27, wherein the configuration information of the first sidelink RLC bearer is determined in at least one of the following manners:
being configured by a network-side device;
being configured by the relay terminal; and
being specified by a protocol.

29. The method according to claim 27, wherein the configuration information of the first sidelink RLC bearer comprises:
RLC configuration; and
MAC configuration, wherein the MAC configuration comprises at least one of the following: logical channel identifier, logical channel priority, and prioritized bit rate.

30. The method according to claim 25, wherein the sidelink RRC message comprises at least indication information of a type of the Uu signaling of the remote terminal, and the type comprises at least one of the following: RRC signaling and NAS signaling.

31. The method according to claim 25, further comprising:
performing a relay related discovery procedure and/or connection establishment procedure between the remote terminal and the relay terminal.

32. The method according to claim 31, wherein the discovery procedure and/or connection establishment procedure is performed by using a signaling radio bearer of a PC5 link.

33. The method according to claim 25, further comprising:
receiving configuration information of a first Uu bearer forwarded by the relay terminal, wherein the configuration information of the first Uu bearer comprises only configuration information of a PDCP layer and an upper layer.

34. A method for remote terminal connection management, applied to a network-side device and comprising:
receiving a first relay request sent by a relay terminal, wherein the first relay request is used to request the network-side device to perform relay function-related configuration; and
sending first configuration information to the relay terminal based on the first relay request, wherein the first configuration information comprises configuration information of a first Uu RLC bearer, and the first Uu RLC bearer is used to transmit Uu signaling of a remote terminal.

35. The method according to claim 34, wherein the first Uu RLC bearer is a Uu SRB RLC bearer or a Uu DRB RLC bearer.

36. The method according to claim 34, wherein if there is more than one remote terminal,
Uu signaling of different remote terminals is transmitted by using different first Uu RLC bearers;
or
Uu signaling of different remote terminals is transmitted by using a same first Uu RLC bearer.

37. The method according to claim 34, wherein
different types of Uu signaling of a same remote terminal is transmitted by using a same first Uu RLC bearer;
or
different types of Uu signaling of a same remote terminal is transmitted by using different first Uu RLC bearers.

38. The method according to claim 36 or 37, wherein at least one of the following indication information is carried in the Uu signaling or sent simultaneously with the Uu signaling:
an identifier of the remote terminal; and
a type of the Uu signaling.

39. The method according to claim 38, wherein whether to carry or send the indication information is configured by the network-side device.

40. The method according to claim 34, further comprising:
sending configuration information of a first sidelink RLC bearer to the relay terminal, wherein the first sidelink RLC bearer is used to transmit Uu signaling of the remote terminal, and the first sidelink RLC bearer has a mapping relationship with the first Uu RLC bearer.

41. The method according to claim 40, wherein the mapping relationship is configured by the network-side device.

42. The method according to claim 40, wherein the first sidelink RLC bearer is a sidelink DRB bearer or a sidelink SRB RLC bearer.

43. The method according to claim 40, wherein the configuration information of the first Uu RLC bearer and the configuration information of the first sidelink RLC bearer comprise at least one of the following:
RLC configuration; and
MAC configuration, wherein the MAC configuration comprises at least one of the following: logical channel identifier, logical channel priority, and prioritized bit rate.

44. The method according to claim 34, wherein the first configuration information further comprises: configuration information of a first Uu DRB RLC bearer, and the first Uu DRB RLC bearer is used to transmit service data of the remote terminal.

45. The method according to claim 34, wherein after the receiving a first relay request sent by a relay terminal, the method further comprises:
receiving a third relay request sent by the relay terminal, wherein the third relay request is used to request the network-side device to configure a Uu RLC bearer for transmitting service data of the remote terminal; and
sending configuration information of a second Uu DRB RLC bearer to the relay terminal based on the third relay request, wherein the second Uu DRB RLC bearer is used to transmit service data of the remote terminal.

46. The method according to claim 34, further comprising:
sending configuration information of a first Uu bearer of the network-side device and the remote terminal to the relay terminal, wherein the configuration information of the first Uu bearer comprises only configuration information of a PDCP layer and an upper layer.

47. A terminal, comprising:
a first sending module, configured to send a first relay request to a network-side device, wherein the first relay request is used to request the network-side device to perform relay function-related configuration; and
a first receiving module, configured to receive first configuration information sent by the network-side device based on the first relay request, wherein the first relay request is used to request the network-side device to configure a Uu RLC bearer for transmitting Uu signaling of a remote terminal.

48. A terminal, comprising:
a transmission module, configured to transmit Uu signaling of a remote terminal by using a first sidelink RLC bearer established between the remote terminal and a relay terminal or by using a sidelink RRC message.

49. A network-side device, comprising:
a first receiving module, configured to receive a first relay request sent by a relay terminal, wherein the first relay request is used to request the network-side device to perform relay function-related configuration; and
a first sending module, configured to send first configuration information to the relay terminal based on the first relay request, wherein the first configuration information comprises configuration information of a first Uu RLC bearer, and the first Uu RLC bearer is used to transmit Uu signaling of a remote terminal.

50. A terminal, comprising a processor, a memory, and a program or instructions stored in the memory and capable of running on the processor, wherein when the program or the instructions are executed by the processor, the steps of the method for remote terminal connection management according to any one of claims 1 to 24 are implemented.

51. A terminal, comprising a processor, a memory, and a program or instructions stored in the memory and capable of running on the processor, wherein when the program or the instructions are executed by the processor, the steps of the method for remote terminal connection management according to any one of claims 25 to 33 are implemented.

52. A network-side device, comprising a processor, a memory, and a program or instructions stored in the memory and capable of running on the processor, wherein when the program or the instructions are executed by the processor, the steps of the method for remote terminal connection management according to any one of claims 34 to 46 are implemented.

53. A readable storage medium, wherein a program or instructions are stored in the readable storage medium, and when the program or the instructions are executed by a processor, the steps of the method for remote terminal connection management according to any one of claims 1 to 24 are implemented; or when the program or the instructions are executed by a processor, the steps of the method for remote terminal connection management according to any one of claims 25 to 33 are implemented; or when the program or the instructions are executed by a processor, the steps of the method for remote terminal connection management according to any one of claims 34 to 46 are implemented.

54. A chip, comprising a processor and a communication interface, wherein the communication interface is coupled to the processor, and the processor is configured to run a program or instructions to implement the steps of the method for remote terminal connection management according to any one of claims 1 to 24; or implement the steps of the method for remote terminal connection management according to any one of claims 25 to 33; or implement the steps of the method for remote terminal connection management according to any one of claims 34 to 46.

55. A computer software product, wherein the computer software product is stored in a non-volatile storage medium, and the software product is configured to be executed by at least one processor to implement the steps of the method for remote terminal connection management according to any one of claims 1 to 24; or to implement the steps of the method for remote terminal connection management according to any one of claims 25 to 33; or to implement the steps of the method for remote terminal connection management according to any one of claims 34 to 46.
